# EUROPÄISCHE PATENTSCHRIFT

(11) **EP 2 530 440 B1**
(45) Veröffentlichungstag und Bekanntmachung des Hinweises auf die Patenterteilung: **22.02.2017**
(21) Anmeldenummer: 12169473.1
(22) Anmeldetag: 25.05.2012
(51) Int. Cl.: G01F 23/26, G01F 25/00, G01N 35/10, G01N 35/00

(54) **Verfahren, Vorrichtung und Laborgerät zum Prüfen einer kapazitiv arbeitenden Messvorrichtung für die Detektion von Phasengrenzen**
Method, apparatus and laboratory device for testing a capacitative measuring device for detecting phase boundaries
Procédé, dispositif et appareil de laboratoire pour vérifier le fonctionnement d'un dispositif de détection de limites de phases de manière capacitive

(30) Priorität: 03.06.2011 CH 9402011
(43) Veröffentlichungstag der Anmeldung: 05.12.2012
(73) Patentinhaber: Tecan Trading AG, 8708 Männedorf (CH)
(72) Erfinder: Märki, Sarah, 8008 Zürich (CH); Cors, Nicolas, 8712 Stäfa (CH); Struchen, Thomas, 8618 Oetwil am See (CH)
(74) Vertreter: OK pat AG

(56) Entgegenhaltungen:
- US-A- 4 449 405
- US-A1- 2006 207 322
- US-A1- 2007 251 341

## Beschreibung

Es geht um ein Verfahren zum Prüfen einer kapazitiv arbeitenden Messvorrichtung, die für die Detektion von Phasengrenzen ausgelegt ist, und um entsprechend ausgestattete Laborgeräte. Insbesondere geht es um eine Funktionsprüfung einer solchen Messvorrichtung und eines Laborgeräts, die zum Detektieren eines Flüssigkeitsniveaus in einem Flüssigkeitsbehälter ausgelegt sind.

### Hintergrund der Erfindung

Es gibt zahlreiche Laborsysteme und medizinische, sowie pharmazeutische Geräte, bei denen es wichtig ist, den Füllstand in Reagenzgläsern, Mikroplatten oder dergleichen zu ermitteln. Es gibt auch Anwendungen, bei denen es um die Detektion von Flüssig-Flüssig-Phasengrenzen geht. Im Folgenden wird der Begriff der Phasengrenze sowohl für Übergänge zwischen gasförmigen und flüssigen Medien (Gas-Flüssig-Phasengrenze) und für Übergänge zwischen verschiedenen flüssigen Medien (Flüssig-Flüssig-Phasengrenze) verwendet.

Besonders wenn es um die Automation von Mess- oder Versuchsabläufen geht, ist eine solche Ermittlung der Phasengrenze von Bedeutung. Die Füllstandsermittlung erfolgt typischerweise mittels einer Detektion des Flüssigkeitsniveaus, d.h. es wird die Lage der Phasengrenze zwischen Luft und Flüssigkeit ermittelt. Dieser Vorgang wird auch als "Liquid Level Detection" (LLD) bezeichnet.

Die Liquid Level Detection kommt z.B. in Pipettiergeräten zum Einsatz. Da ein Gas und eine Flüssigkeit deutlich unterschiedliche Dielektrizitätskonstanten besitzen, kann die Gas-Flüssig-Phasengrenze über eine Kapazitätsänderung bestimmt werden.

Die Detektion von Flüssig-Flüssig-Phasengrenzen spielt z.B. bei einer Flüssig-Flüssig-Extraktion eine wichtige Rolle. Dabei ist es oft wichtig, die exakte Phasengrenze zwischen wässriger und organischer Phase zu kennen. Da nicht mischbare Flüssigkeiten deutlich unterschiedliche Dielektrizitätskonstanten besitzen, kann die Flüssig-Flüssig-Phasengrenze über eine Kapazitätsänderung bestimmt werden. Dies kann z.B. dazu verwendet werden, um eine Zwischenphase abzupipettieren.

In den letzten Jahren wurden die Laborgeräte immer genauer und komplexer. Der Trend geht in Richtung hoher Integration, Automation und Parallelität. Dies führt zu einer hohen räumlichen Verdichtung der einzelnen Komponenten und zu einer zeitlichen Verkürzung der Messabläufe. Diese Verdichtung bringt nicht nur mechanische und andere konstruktionstechnische Probleme mit sich, sondern auch die Genauigkeit der elektronischen Auswertbarkeit, das sich gegenseitig Beeinflussen benachbarter Messkanäle und andere Aspekte können zu Problemen führen.

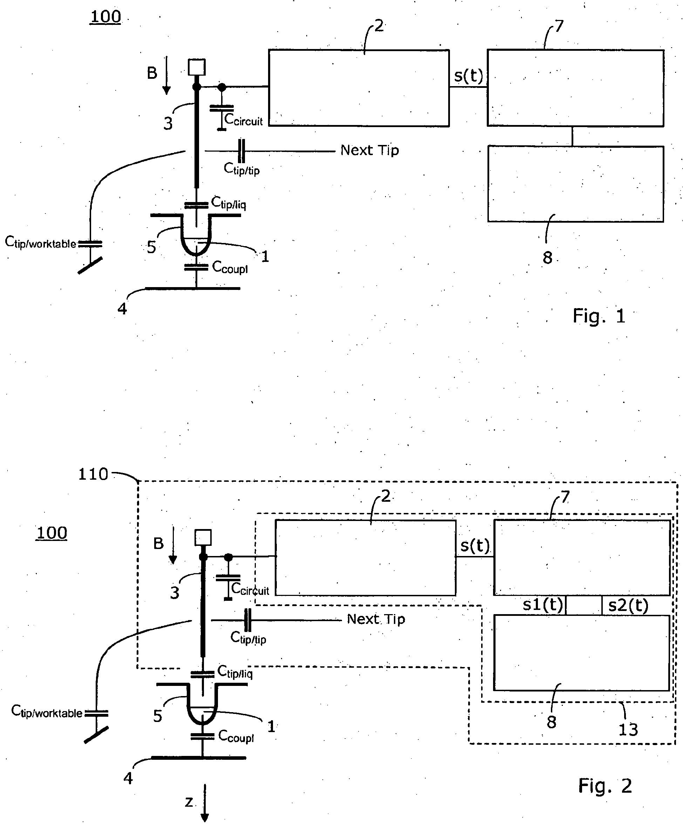

Das Detektieren einer Phasengrenze wird typischerweise auf kapazitivem Weg gemacht, wie anhand von Fig. 1 schematisch gezeigt. Fig. 1 zeigt den Aufbau eines bekannten Laborgeräts 100, das hier zum Detektieren eines Flüssigkeitsniveaus ausgelegt ist. Die Anwesenheit einer Flüssigkeit 1 oder die Phasengrenze zwischen Luft und Flüssigkeit 1 wird hier z.B. durch das Beobachten einer Kapazitätsänderung in C_{tip/liq} und in der Serienkapazität C_{coupl} detektiert. Eine elektronische Lade-/Entlade-Schaltung 2 sorgt für ein Aufladen und Entladen, um die effektive Kapazität zwischen einem Fühler, z.B. in Form einer Pipettenspitze 3, und einer geerdeten Grundplatte 4 messen zu können. Die Signalverarbeitung kann mit einer Signalverarbeitungsschaltung 7 erfolgen, die z.B. von einem Kontroller 8 unterstützt wird.

Die effektive Kapazität, die sich je nach Laborgerät 100 ergibt aus den Streukapazitäten, elektrischen Einkopplungen durch den Fühler oder die Pipettenspitze 3, der Leitfähigkeit der Flüssigkeit 1 und dem übersprechen zwischen benachbarten Messkanälen (in Fig. 1 Next Tip genannt), ist sehr klein. Sie liegt typischerweise im Bereich von wenigen Picofarad (pF). Die Kapazitätsänderung, die sich beim Eintauchen aus der Luft in eine Flüssigkeit ergibt, ist nochmals ca. um einen Faktor 100 bis 1000 kleiner.

Für das Detektieren von Phasengrenzen wird gemäss einer älteren, aber bisher unveröffentlichten internationalen Patentanmeldung PCT/2010/070599, die am 22. Dezember 2010 unter Beanspruchung der Priorität der Schweizer Patentanmeldung CH 02011/09 vom 30. Dezember 2009 eingereicht wurde, eine mehrkanalige, kapazitiv arbeitende Messvorrichtung 110 eingesetzt. Diese Messvorrichtung 110 umfasst, wie in Fig. 2 gezeigt, pro Kanal einen Fühler 3 (z.B. in Form einer leitenden Pipettenspitze oder Nadel), der in einen Flüssigkeitsbehälter 5 des entsprechenden Kanals zugestellt wird. Bei dem Zustellen wird ein erstes Signal s1(t) mit kurzer Pulsweite und ein zweites Signal s2(t) mit grösserer Pulsweite durch eine Messschaltung 8 verarbeitet, um eine Phasengrenze zwischen zwei Medien in dem, Flüssigkeitsbehälter 5 des entsprechenden Kanals zu detektieren.

Die Vorrichtung 110 ist speziell zum Detektieren eines Flüssigkeitsniveaus (d.h. einer Gas-Flüssig-Phasengrenze) in einem Flüssigkeitsbehälter 5 ausgelegt. Diese Vorrichtung 110 lässt sich aber auch zum Ermitteln anderer Phasengrenzen einsetzen. Zum Zweck des Detektierens umfasst sie pro Kanal einen Fühler 3, der in Richtung der Flüssigkeit 1 im Flüssigkeitsbehälter 5 zustellbar ist. Es wird eine Schaltung 13 mit den Schaltungsblöcken 2, 7 und ein Messschaltung 8, vorzugsweise in Form eines Controllermoduls, eingesetzt, die ein Ausgangssignal s(t) des Fühlers 3 verarbeitet, um eine Kapazitätsänderung beim Erreichen oder Durchstossen der Phasengrenze zu detektieren. Die Schaltung 13 umfasst mindestens einen ersten Filter, um ein erstes Signal s1(t) mit kurzer Pulsweite aus dem Ausgangssignal s(t) heraus zu filtern. Ausserdem umfasst die Schaltung 13 einen zweiten Filter, um ein zweites Signal s2(t) mit grösserer Pulsweite aus dem Ausgangssignal s(t) heraus zu filtern. Die Messschaltung 8 weist ein Komparatormodul auf, das so ausgelegt ist, dass ermittelbar ist, ob das erste Signal s1(t) einen ersten Schwellwert T1 erreicht. Der erste Schwellwert T1 wird von der Vorrichtung 110 oder dem Laborgerät 100 vorgegeben. Zusätzlich zu dem ersten Schwellwert T1 kann auch die Pulsweite P1 .ermittelt und/oder ausgewertet werden. Ausserdem weist die Messschaltung 8 ein Verarbeitungsmodul auf, das so ausgelegt ist, dass ermittelbar ist, ob das zweite Signal s2(t) mindestens ein vorgegebenes zweites Signalkriterium (z.B. eine Mindeststeigung ST, oder einen Schwellwert T2, oder eine Pulsweite P2) erfüllt.

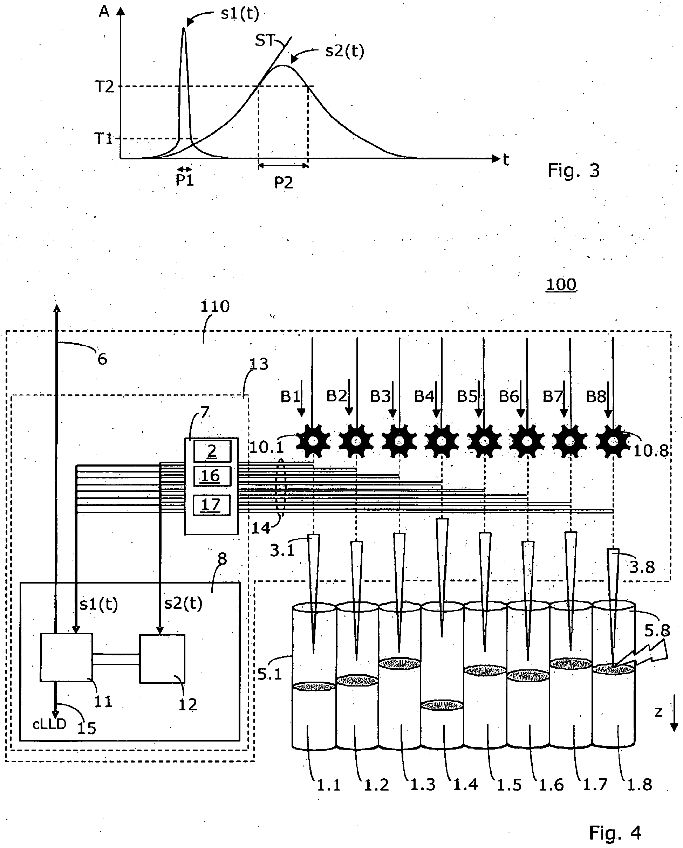

In Fig. 3 ist ein schematisches Amplituden-Zeit-Diagramm gezeigt, in dem zwei Signale s1(t) und s2(t), gemäss der technischen Lehre der internationalen Patentanmeldung PCT/2010/070599, einer normalen Messung in vereinfachter Form dargestellt sind. Anhand dieser beispielhaften Darstellung wird die grundlegende Funktionsweise der Vorrichtung 110 beschrieben. Durch ein Aufspalten des Signals s(t) mittels zweier Filter in ein erstes Signal s1(t) und ein zweites Signal s2(t), wird eine sehr genaue Aussage ermöglicht. Trotzdem ist es möglich, aufgrund des ersten Signals s1(t) unmittelbar zu reagieren. Eine solche unmittelbare Reaktion kann notwendig sein, um zum Beispiel nach dem Detektieren eines Signals s(t), das nach einem Eintauchsignal aussieht, einen Stopp der Zustellbewegung B zu bewirken, um nicht mehr als erforderlich einzutauchen.

In Fig. 3 ist ein erster Schwellwert T1 bei einer relativ kleinen Amplitude A angesetzt. In der einfachsten Ausführungsform der Vorrichtung 110 wird nur ermittelt, ob das erste Signal s1(t) diesen ersten Schwellwert T1 erreicht. Falls dies der Fall ist, dann gilt hier das erste Kriterium für eine Detektion als erfüllt.

In Fig. 3 ist ein zweiter Schwellwert T2 bei einer Amplitude A angesetzt, die oberhalb des ersten Schwellwerts T1 liegt. Es wird nun ermittelt, ob das zweite Signal s2(t) mindestens ein vorgegebenes zweites Signalkriterium erfüllt In der einfachsten Ausführungsform der Vorrichtung 110 wird nur ermittelt, ob das zweite Signal s2(t) diesen zweiten Schwellwert T2 erreicht. Falls dies der Fall ist, dann gilt hier das zweite Kriterium für eine Detektion als erfüllt.

Falls die ersten Signalkriterien und die zweiten Signalkriterien erfüllt sind, wie beschrieben, kann z.B. die Ausgabe einer Kennung (z.B. in Form eines Signals oder eines Codes) erfolgen. Diese kennung zeigt an, dass die Vorrichtung 110 eine Detektion eines Flüssigkeitsniveaus vorgenommen hat.

Um so höher der Integrationsgrad solcher kapazitiv arbeitenden Messvorrichtungen ist, um so problematischer ist es, die zu messenden Kapazitätsänderungen aufgrund von Streukapazitäten, Übersprechen zwischen benachbarten Kanälen und Kapazitätsänderungen aufgrund sich bewegender elektrischer Zuleitungen erkennen zu können.

Bis anhin werden nach der Endmontage eines Laborgerätes umfangreiche Quasi-Realtestläufe zur Liquid Level Detection durchgeführt. Dazu wird der Arbeitstisch mit Hälterungen (sogenannte Carrier), mit Röhrchen, Trögen und Mikroplatten (sogenannte Läbware) bestückt. Die Bestückung des Arbeitstisches muss in der Testsoftware des Laborgerätes exakt nachgebildet werden. Die Röhrchen und die Vertiefungen der Mikroplatten (so genannte Wells) werden mit verschiedenen Volumina Wassers und Wasser unterschiedlicher Leitfähigkeit (de-ionisiertes Wasser bis physiologische Kochsalzlösung) gefüllt. Bei diesen Testläufen werden die Fühler der einzelnen Kanäle nacheinander oder in Kombination miteinander (alle geraden/ungeraden Kanäle zusammen, einzelne oder alle zusammen) in die entsprechend gefüllten Teströhrchen oder Wells geführt und es werden bei diesem Vorgang die Signale ausgewertet. Dabei wird die Empfindlichkeit, die Verkabelung und das Übersprechen geprüft. Für die einzelnen Tests muss jeweils ein neuer Satz Pipettenspitzen bereitgestellt werden oder wenn Pipettiernadeln verwendet werden, müssen die Nadeln jeweils gewaschen werden.

Im Reparatur- oder Service-Fall beim Kunden kommt ein leicht reduziertes Testprogramm zur Liquid Level Detection zur Anwendung. Dennoch ist es bisher unumgänglich, die kundenspezifische Bestückung des Arbeitstisches mit Carriern zu ändern, die testspezifischen Carrier aufzusetzen und nach dem Test die exakte Kundenbestückung wieder herzustellen.

Es ist ein Nachteil dieses Ansatzes, dass der Zeit- und Arbeitsaufwand relativ gross ist. Es ist wichtig, die richtige Labware mit dem richtigen Volumen (=Füllhöhe) der Flüssigkeit mit der richtigen Leitfähigkeit zu füllen. Als weiterer Nachteil wird angesehen, dass spezielle Arbeitstischbestückungen mit Carriern und Labware eingesetzt werden müssen.

Mit dem zunehmenden Grad der Automatisierung der Laborgeräte ist es ausserdem wünschenswert, die entsprechenden Abläufe so zu gestalten, dass es keine oder nur wenige manuelle Interventionen braucht. Dabei ist zu berücksichtigen, dass z.B. in automatisierten Pipetiersystemen oder-geräten zahlreiche Situationen auftreten können, die von bisherigen automatisierten Pipetiersystemen oder -geräten nicht selbsttätig gelöst werden können.

Es stellt sich daher die Aufgabe, eine Vorrichtung und ein Verfahren zum Prüfen einer kapazitiv arbeitenden Messvorrichtung bereitzustellen, die für die Detektion von Phasengrenzen ausgelegt ist. Ausserdem geht es um das Bereitstellen eines entsprechend ausgestatteten Laborgeräts.

Das Verfahren, respektive die Messvorrichtung oder das Laborgerät soll vorzugsweise so ausgelegt sein, dass sie/es kritische Situationen oder Spezialfälle selbständig erkennt und somit während eines Prüfablaufs möglichst keine manuelle oder mechanische Intervention erfordert.

Diese Aufgaben werden erfindungsgemäß gelöst durch Verfahren nach den Ansprüchen 1 und 2, Vorrichtungen nach den Ansprüchen 14 und 15 und durch ein Laborgerät nach Anspruch 20.

Zum Prüfen der Messvorrichtung werden bei einem einkanaligen Gerät die folgenden Schritte ausgeführt. Es wird eine Zustellbewegung des Fühlers des einen Kanals ausgeführt während dem ein Signal aus einem Ausgangssignal der Messvorrichtüng gewonnen wird. Das Signal des Kanals der Messvorrichtung wird ausgewertet, um eine Aussage über die elektrische Verbindung (Verbindungsaussage genannt) zwischen dem Fühler und der Messschaltung machen zu können.

Zum Prüfen der Messvorrichtung werden bei einem mehrkanaligen Gerät die folgenden Schritte ausgeführt. Es wird eine Zustellbewegung eines Fühlers eines einzelnen Kanals ausgeführt, während die Fühler mindestens eines Teils der anderen Kanäle, vorzugsweise die unmittelbar benachbarten Fühler, nicht bewegt werden. Es wird ein Signal aus einem Ausgangssignal der Messvorrichtung gewonnen. Das Signal des Kanals der Messvorrichtung mit bewegtem Fühler und die Signale der Kanäle mit unbewegtem Fühler werden ausgewertet, um eine Aussage (Verbindungsaussage genannt) über die elektrische Verbindung zwischen den Fühlern und der Messschaltung machen zu können.

Gemäss Erfindung wird entweder ein Signal elektronisch ausgewertet, oder es werden mehrere Signale elektronisch ausgewertet. Vorzugsweise wird ein schnelles Signal (erstes Signal) und ein langsames Signal (zweites Signal) durch ein Filterverfahren auseinander gefiltert und elektronisch ausgewertet. Es können auch mehr als zwei Signale auseinander gefiltert und elektronisch ausgewertet werden.

Zum Auswerten des/der Signals/Signale kommen vorzugsweise entsprechende signalspezifische Signalprüfkriterien zur Anwendung.

Gemäss Erfindung wird vorzugsweise während des Prüfverfahrens ein Fühler abwärts und/oder aufwärts bewegt und es wird ein Signal ausgewertet oder es werden mehrere. Signale ausgewertet. Vorzugsweise werden die ersten schnellen und die zweiten langsamen Signale ausgewertet.

Das erfindungsgemäße Verfahren eignet sich besonders zum Einsatz in einer mehrkanaligen Vorrichtung, die Phasengrenzen zwischen Medien mittels mehrerer autark zustellbarer Fühler detektiert, wobei die Vorrichtung Kapazitätsänderungen beim Bewegen der Fühler detektiert indem es die Signale, vorzugsweise erste Signale und zweite Signale nach Anwendung eines Filterverfahrens, auswertet.

Vorzugsweise wird das Verfahren in einer Vorrichtung oder einem Laborgerät eingesetzt, wo das Ausgangssignal an einem Fühler ein Potential von wenigen Volt und eine Frequenz von wenigen Hundert Kilohertz hat.

Vorzugsweise wird das Verfahren in einer Vorrichtung oder einem Laborgerät eingesetzt, wo die Bewegung eines Fühlers (relative Wegstrecke) im Bereich zwischen 10 mm und 200 mm liegt.

Vorzugsweise wird das Verfahren in einer Vorrichtung oder einem Laborgerät eingesetzt, wo die Bewegung eines Fühlers mit einer langsamen Geschwindigkeit im Bereich zwischen 10 mm/s und 200 mm/s und die schnelle Geschwindigkeit im Bereich zwischen 200 mm/s und 1000 mm/s liegt.

Die Erfindung ist dazu ausgelegt, verschiedene Sonderfälle, Stör- und Einflussgrössen automatisch erkennen zu können. Vorzugsweise ist die Vorrichtung oder das Laborgerät so ausgelegt, das es eine situativ angepasste Reaktion zeigt.

Es ist ein Vorteil der vorliegenden Erfindung, dass verschiedene Funktionen sequentiell geprüft und verschiedene Arten von Fehlern erkannt werden können. Dies geschieht bei allen Ausführungsformen in einem sogenannten berührungslosen, respektive trockenen Verfahren, d.h. es muss beim Durchführen der Prüfverfahren keine Flüssigkeit berührt werden, bzw. es muss kein Eintauchvorgang ausgeführt werden. Das erfindungsgemässe Verfahren wird daher im Folgenden als Verfahren zum trockenen Prüfen bezeichnet, um diesen wesentlichen Aspekt zum Ausdruck zu bringen. Die Prüfung der elektrischen Verbindungen erfolgt gemäss Erfindung ohne Berührung eines Referenzkörpers oder-mediums. Die Prüfung der elektrischen Verbindungen erfolgt gemäss Erfindung vorzugsweise im Trockenen, d.h. es muss zum Prüfen keine Phasengrenze gesucht oder durchdrungen werden.

Das Verfahren der Erfindung ist weniger zeitaufwendig und störanfällig als vorbekannte Verfahren.

Gemäss Erfindung werden die erforderlichen Tests berührungslos (vorzugsweise flüssigkeitsunabhängig) durchgeführt werden, so dass der oder die Fühler weder mit Flüssigkeiten kontaminiert werden noch die Fühler respektive deren Beschichtung durch das Berühren einer festen Kontaktoberfläche beschädigt werden können.

Gemäss Erfindung ist keine besondere Anordnung von Carriern und Labware auf dem Arbeitstisch des Laborgerätes notwendig.

Gemäss Erfindung kann das Verfahren direkt über einer optionalen Waschstation, welche sich auf dem Arbeitstisch befindet, durchgeführt werden. Dadurch muss die kundenspezifische Bestückung des Arbeitstisches mit Carriern nicht geändert werden.

Gemäss Erfindung kann das Verfahren innerhalb einer längeren Folge von Pipettierprozessen als Zwischenkontrollschritt ("in Process Control") z.B. über einer Waschstation durchgeführt werden.

Das Verfahren wird vorzugsweise als einzelne Kommandozeile in eine Steuersoftware für den Endbenutzer implementiert. Dadurch muss der Pipettierprozess als Gesamtes nicht unterbrochen werden.

Gemäss Erfindung kann die Verbindung und/oder Leitungsqualität zwischen den Spitzen oder Fühlern und der Messschaltung geprüft werden. So kann man zum Beispiel ermitteln, ob die Koaxialkabel, die vorzugsweise verwendet werden, richtig verbunden sind, oder ob bei einem mehrkanaligen Gerät die Spitzen oder Fühler mit den richtigen Kanälen verbunden sind. Es kann auch die Qualität der Abschirmung der Leitungsverbindung geprüft werden. Es kann auch der Signal/Rauschabstand ermittelt werden. Wenn der Signal/Rauschabstand vorgegebene Kriterien erfüllt, dann wird die elektrische Verbindung für die Verwendung im normalen Messbetrieb als qualitativ geeignet eingestuft.

Alle diese Massnahmen oder Auswertungen dienen dazu eine Verbindungsaussage machen zu können.

Gemäss Erfindung können fehlerhafte Verkablungen, defekte Kabelverbindungen und falsch montierte Spitzen oder Fühler einfach und sicher erkannt werden.

Gemäss Erfindung können ausserdem auf Wunsch auch Störeinflüsse von elektrischen Rauschquellen wie Motor-Rauschen oder anderes elektrisches Rauschen (z.B. Einkopplungen von einem Wireless-LAN) geprüft werden.

Gemäss Erfindung können die erforderlichen Tests selbst bei komplexen und hochintegrierten, mehrkanaligen Systemen innerhalb weniger Minuten durchgeführt werden.

Gemäss Erfindung kann das Prüfen schaltungstechnisch unter Einsatz spezieller Prüfsoftware oder Module durchgeführt werden.

Die Prüfsoftware oder Module sind vorzugsweise Bestandteil der Vorrichtung oder des Laborgeräts.

Vorzugsweise ist das Prüfverfahren der Erfindung in einem Mikroprozessor der Vorrichtung oder des Laborgeräts implementiert.

Die Prüfsoftware oder Module können aber auch separat ausgeführt und zum Verbinden mit der Vorrichtung oder dem Laborgerät ausgelegt sein.

Vorzugsweise nutzt die Prüfsoftware oder das Modul Befehle (z.B. in Form von Kommandozeilen), die bereits in der Vorrichtung oder dem Laborgerät für die Liquid Level Detection (LLD) implementiert sind. Dabei werden zum Prüfen nur jeweils das oder die geeigneten Signalprüfkriterien, z.B. in Form von Schwellenwerten, vorgegeben und es werden die gewünschten Geschwindigkeiten für die Zustellbewegung eingestellt.

Gemäss Erfindung können das Signal oder die Signale im digitalen Schaltungsumfeld oder im analogen Umfeld für Prüfzwecke eingesetzt werden. Vorzugsweise werden analoge Signale in digitale Signale umgewandelt, um dort mit dem/den Signalprüfkriterien in Bezug gesetzt zu werden und um im digitalen Schaltungsumfeld die Auswertungen respektive Beurteilungen vornehmen zu können.

Gemäss Erfindung kann das Prüfen eines Kanals ausgeführt werden, indem andere Filter zum Einsatz gebracht werden als beim normalen kapazitiven Detektieren von Phasengrenzen.

Vorzugsweise wird bei einem mehrkanaligen Gerät, das ein Filterverfahren zum Trennen von zwei Signalen einsetzt, ein Bandpassfilter für das zweite langsamere Signal zum Einsatz gebracht, um ein geeignetes Frequenzband zu selektieren, das eine zuverlässige Durchführung des Prüfverfahrens ermöglicht.

Zusätzlich oder alternativ kann der Verstärkungsfaktor (gain) der Signalverarbeitung eingestellt werden.

Zusätzlich oder alternativ kann auch die Abtastrate (sampling rate) der Analog-Digital-Wandlung des Signals verstellt werden, um eine zuverlässigere Durchführung des Prüfverfahrens zu ermöglichen.

Das Prüfverfahren der Erfindung kann durchgeführt werden, um
- eine Qualitätsprüfung zu machen,
- eine Zwischenprüfung zu machen,
- eine Prüfung nach Abschluss eines Fertigungs- oder Montageschritts (z.B. durch Montagepersonal) zu machen
- eine Feldprüfung nach einer Reparatur oder einem Routine-Service (z.B. durch Servicepersonal) zu machen
- eine PQ (Performance Qualification) durchführen zu lassen (z.B. durch einen Endbenutzer), oder
- einen "in Process Control" Schritt innerhalb einer Folge von Pipettierschritten durchzuführen (z.B. durch einen Endbenutzer).

Durch die Erfindung ist es möglich, Universalvorrichtungen und Laborgeräte bereit zu stellen, die in den verschiedensten Situationen und unter den verschiedensten Voraussetzungen zuverlässige Prüfergebnisse, zum Beispiel im Rahmen einer der oben genannten Prüfverfahren, liefern.

Die erfindungsgemäße Vorrichtung, das erfindungsgemäße Laborgerät und das erfindungsgemäße Verfahren werden nun an Hand von schematischen, den Umfang der Erfindung nicht beschränkenden Zeichnungen von beispielhaften Ausführungsformen im Detail erläutert.
- Fig. 1: zeigt eine schematische Seitenansicht eines Laborgeräts gemäß Stand der Technik;
- Fig. 2: zeigt eine schematische Seitenansicht einer Vorrichtung mit einer Schaltung gemäß einer bisher unveröffentlichten älteren Anmeldung des Anmelders der vorliegenden Anmeldung, wobei nur der Fühler eines einzelnen Kanals gezeigt ist;
- Fig. 3: zeigt ein schematisches Amplituden-Zeit-Diagramm in dem zwei Signale in vereinfachter Form dargestellt sind, um die Anwendung von Kriterien in einer ersten Vorrichtung nach Fig. 2 beschreiben zu können;
- Fig. 4: zeigt eine schematische Seitenansicht einer mehrkanaligen, kapazitiv arbeitenden Messvorrichtung, die zum Durchführen eines Prüfverfahrens gemäss Erfindung geeignet ist;
- Fig. 5A: zeigt eine schematische Seitenansicht der Messvorrichtung nach Fig. 4 vor dem Durchführen eines Prüfverfahrens gemäss Erfindung;
- Fig. 5B: zeigt eine schematische Seitenansicht der Messvorrichtung nach Fig. 4 während des Durchführens eines Prüfverfahrens gemäss Erfindung;
- Fig. 6A: zeigt ein schematisches Amplituden-Zeit-Diagramm in dem zwei Signale in vereinfachter Form dargestellt sind, um die Anwendung von Signalprüfkriterien gemäss Erfindung beschreiben zu können;
- Fig. 6B: zeigt ein weiteres schematisches Amplituden-Zeit-Diagramm in dem zwei Signale in vereinfachter Form dargestellt sind, um die Anwendung von Signalprüfkriterien gemäß Erfindung beschreiben zu können;
- Fig. 7: zeigt ein schematisches Flussdiagramm des Funktionsprinzips eines Prüfverfahrens gemäß Erfindung;
- Fig. 8: zeigt ein schematisches Flussdiagramm des Funktionsprinzips eines Prüfverfahrens gemäß Erfindung;
- Fig. 9: zeigt ein schematisches Flussdiagramm des Funktionsprinzips der Signalauswertung einer erfindungsgemäßen Vorrichtung.

Im Folgenden werden vorteilhafte Ausführungsformen der Erfindung beschrieben, wobei es sich um beispielhafte Ausführungsformen handelt. Diese umfassen sowohl verschiedene Ausbildungen der Gesamterfindung, als auch Baugruppen und Einzelteile der Erfindung. Grundsätzlich lassen sich die beschriebenen Baugruppen und Einzelteile der verschiedenen Ausführungsformen miteinander kombinieren, respektive die Baugruppen und Einzelteile einzelner Ausführungsformen lassen sich durch die Baugruppen und Einzelteile anderer Ausführungsformen ersetzen. Die hierbei gebildeten Kombinationen können kleinere, jedem Fachmann geläufige und daher nicht weiter beschriebene Anpassungen bedingen, zum Beispiel um ein Zusammenwirken oder Ineinandergreifen der Baugruppen und Einzelteile zu ermöglichen.

Der Begriff Phasengrenze wird verwendet für Grenzen zwischen zwei oder mehr Medien, die unterschiedliche Dielektrizitätskonstanten besitzen. Speziell geht es um Flüssig-Flüssig und Gas-Flüssig Phasengrenzen.

Der Begriff Modul wird hier verwendet, um eine Funktionsgruppe zu umschreiben, die in Hardware, Software oder als Kombination aus Hard- und Software realisiert ist.

Der Begriff "Kennung" wird hier verwendet für einen Code, ein Codewort, ein Signal, eine Speichereintragung oder ein Flag, das gesetzt wird.

Im Zusammenhang mit der vorliegenden Erfindung ist verschiedentlich von Laborgeräten 100 die Rede. Es handelt sich um Geräte, Systeme, Anlagen, Apparate, Handhabungszentren und dergleichen, die mit Mitteln zur Ermittlung einer Phasengrenze ausgestattet sind. Die erfindungsgemässe Vorrichtung 110 ist ein Element oder eine Komponente eines solchen Laborgeräts 100. Ein Laborgerät 100 kann zum Beispiel mehrere identische Vorrichtungen 110 oder mehrere verschiedene Vorrichtungen 110 umfassen.

Der Begriff "Prüfung" wird hier verwendet für das Prüfen einer Vorrichtung 110 oder eines Laborgeräts 100. Der Begriff "Prüfverfahren" bezeichnet das Durchführen einer solchen Prüfung.

Das Prüfverfahren der Erfindung kann durchgeführt werden, um
- eine Qualitätsprüfung zu machen,
- eine Zwischenprüfung zu maschen,
- eine Prüfung nach Abschluss eines Fertigungs- oder Montageschritts (z.B. durch Montagepersonal) zu machen
- eine Feldprüfung nach einer Reparatur oder einem Routine-Service (z.B. durch Servicepersonal) zu machen
- eine PQ (Performance Qualification) durchführen zu lassen (z.B. durch einen Endbenutzer), oder
- einen "in Process Control" Schritt innerhalb einer Folge von Pipettierschritten durchzuführen (z.B. durch einen Endbenutzer).

Die Erfindung basiert auf einer grossen Anzahl von systematischen Experimenten, bei denen die gegenseitige Beeinflussung der relativen Bewegung eines Fühlers oder einer Nadel 3 in Bezug auf die anderen Fühler oder Nadeln 3 der Vorrichtung 110 untersucht wurden. Verschiedenste Konstellationen und Situationen wurden experimentell untersucht. Bei diesen Experimenten wurden jeweils die Verläufe der ersten Signale s1(t), bzw. s1d mit kurzer Pulsweite und der zweiten Signale s2(t), bzw. s2d mit grösserer Pulsweite durch die Messschaltung 8 verarbeitet, aufgezeichnet und ausgewertet (sld und s2d stehen hier für die ersten und zweiten Signale im digitalen Schaltungsumfeld).

Die systematischen Experimente haben ergeben, dass man die Prüfung im Trockenen durchführen kann. D.h. es braucht keine speziellen Aufbauten oder Apparaturen, wie z.B. die eingangs erwähnte Labware, um Prüfungen durchzuführen. Gemäss Erfindung kann das Prüfen schaltungstechnisch unter Einsatz spezieller Prüfsoftware oder Module 20 durchgeführt werden. Die Prüfsoftware oder Module 20 können Bestandteil der Vorrichtung 110 oder des Laborgeräts 100 sein. Die Prüfsoftware oder Module 20 können aber auch separat ausgeführt und zum Verbinden mit der Vorrichtung 110 oder dem Laborgerät 100 (z.B. über einen Bus 6) ausgelegt sein.

Das Verfahren der Erfindung ist speziell zum Prüfen einer vorzugsweise mehrkanaligen, kapazitiv arbeitenden Messvorrichtung 110 ausgelegt, wie sie beispielhaft in Fig. 4 gezeigt ist. Das Verfahren der Erfindung kann aber auch zum Prüfen einer einkanaligen, kapazitiv arbeitenden Messvorrichtung 110 eingesetzt werden.

In Fig. 4 ist eine schematische Seitenansicht einer entsprechenden Vorrichtung 110 mit einer Messschaltung 13 gezeigt. Die eingangs beschriebenen Details lassen sich auf diese Vorrichtung 110 übertragen. Daher werden im Folgenden hauptsächlich die Unterschiede zu der Vorrichtung 110 nach Fig. 1 beschrieben. Das Laborgerät 100 umfasst hier mehrere Kanäle (hier n=acht Kanäle). Jeder Kanal weist Zustellmittel 10.n auf, die hier vereinfacht durch Zahnräder dargestellt sind. Die Zustellmittel 10.n erzeugen eine entsprechende Zustellbewegung Bn, wie durch Pfeile angedeutet, die abwärts weisen. Durch die Zustellmittel 10.n werden die Fühler 3.n vorzugsweise einzeln zugestellt. Dabei tauchen die Fühler 3.n in Flüssigkeitsbehälter 5.n, die allesamt z.B. mit Flüssigkeiten 1.n gefüllt sind. Die jeweiligen Phasengrenzen sind durch graue Flächen angedeutet. Im gezeigten Moment taucht soeben der Fühler 3.8 in die Flüssigkeit 1.8 des Flüssigkeitsbehälters 5.8. Die relative Kapazitätsänderung, die sich im achten Kanal K.8 der Vorrichtung 110 ergibt, ist hier durch ein Blitzsymbol dargestellt. Die Fühler 3.n der einzelnen Kanäle K.n sind über einzelne Leitungen 14 (vorzugsweise abgeschirmte Leitungen) mit der Signalverarbeitungsschaltung 7 der Messschaltung 13 verbunden. Diese Signalverarbeitungsschaltung 7 verarbeitet die Signale s(t) der einzelnen Kanäle K.n separat. Jedes Signal s(t) eines jeden Kanals K.n wird gefiltert, um dann die entsprechenden ersten und zweiten Signale s1(t) und s2(t) zu erhalten. D.h. insgesamt erhält man acht erste Signale s1(t) und acht zweite Signale s2(t) pro Messzyklus, wenn man eine Vorrichtung 110 mit n=8 Kanälen betrachtet. Die Fühler 3.n werden durch die Lade-/Entlade-Schaltung 2 mit einer geeigneten Frequenz (vorzugsweise im Bereich von einigen Hundert Kilohertz) geladen und entladen.

Die Vorrichtung 110 umfasst ein Controllermodul 8, wie gezeigt. Das Controllermodul 8 umfasst ein Kömparatormodul, das hier bei dieser Vorrichtung durch einen 1. Mikroprozessor 11 realisiert ist. Das komparatormodul ist so ausgelegt, respektive der 1. Mikroprozessor 11 ist so programmiert, dass es/er ermittelt, ob die ersten Signale s1(t) der einzelnen Kanäle K.n erste Schwellwerte T1 erreichen. Dieses Prinzip wurde bereits zuvor beschrieben. Hier verarbeitet das Komparatormodul, respektive der 1. Mikroprozessor 11 jedoch alle ersten Signale s1(t) der acht Kanäle K.n gestaffelt hintereinander.

Statt mit einem oder zwei Signalen kann die Erfindung auch auf der Auswertung/Verarbeitung mehrerer Signale basieren.

Das Controllermodul 8 umfasst weiterhin ein Verarbeitungsmodul, das hier bei dieser Ausführungsform durch einen 2. Mikroprozessor 12 realisiert ist. Das Verarbeitungsmodul ist vorzugsweise so ausgelegt, respektive der 2. Mikroprozessor 12 ist so programmiert, dass es/er ermittelt, ob die zweiten Signale s2(t) vorgegebene zweite Signalkriterien erfüllen. Dieses Prinzip wurde bereits eingangs beschrieben. Hier verarbeitet das Verarbeitungsmodul, respektive der 2. Mikroprozessor 12 alle zweiten Signale s2(t) der acht Kanäle gestaffelt. Wenn für einen der acht Kanäle beide Signale s1(t) und s2(t) die Kriterien erfüllen, dann wird davon ausgegangen, dass bei diesem Kanal K.n der Fühler 3.n die Phasengrenze zur Flüssigkeit 1.n erreicht hat. Im vorliegenden Fall würde für den achten Kanal K.8 eine Kennung (z.B. in Form eines Signals oder Codes) ausgegeben werden, weil der Fühler 3.8 soeben in die Flüssigkeit 1.8 im Behälter 5.8 eingetaucht ist. Diese Kennung kann z.B. über eine Schnittstelle (cLLD) 15 ausgegeben werden. Anhand dieser Kennung kann z.B. das Laborgerät 100 Entscheidungen treffen, Reaktionen auslösen oder dergleichen.

Die Vorrichtung 110, in der das erfindungsgemässe Prüfverfahren zur Anwendung kommt, umfasst somit zusammenfassend ausgedrückt, pro Kanal K.n einen Fühler 3.n (wobei n einen ganze Zahl grösser gleich 1 ist), der in einen Flüssigkeitsbehälter 5.n des entsprechenden Kanals K.n zugestellt wird. Beim Zustellen (durch die Zustellbewegung Bn angedeutet) wird ein Signal (z.B. s1(t)) oder werden erste Signale s1(t) mit kurzer Pulsweite und zweite Signale s2(t) mit grösserer Pulsweite durch eine Messschaltung 13 verarbeitet, um eine Phasengrenze zwischen zwei Medien in den Flüssigkeitsbehälter 5.n der entsprechenden Kanäle K.n zu detektieren.

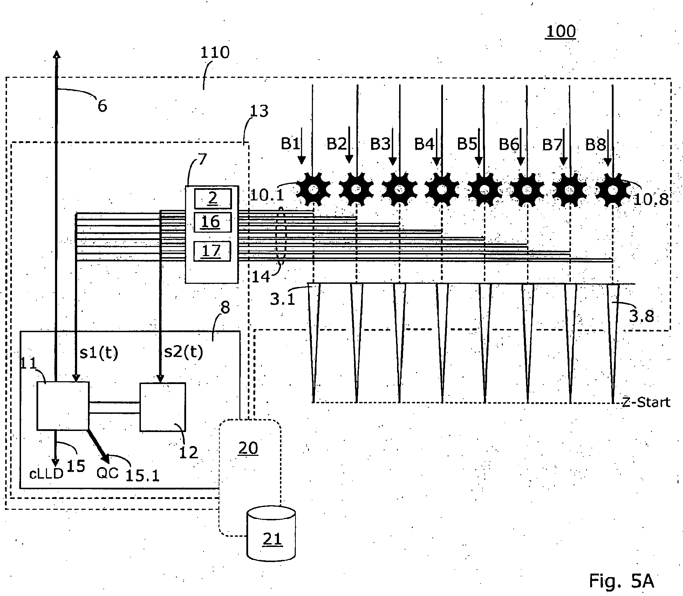

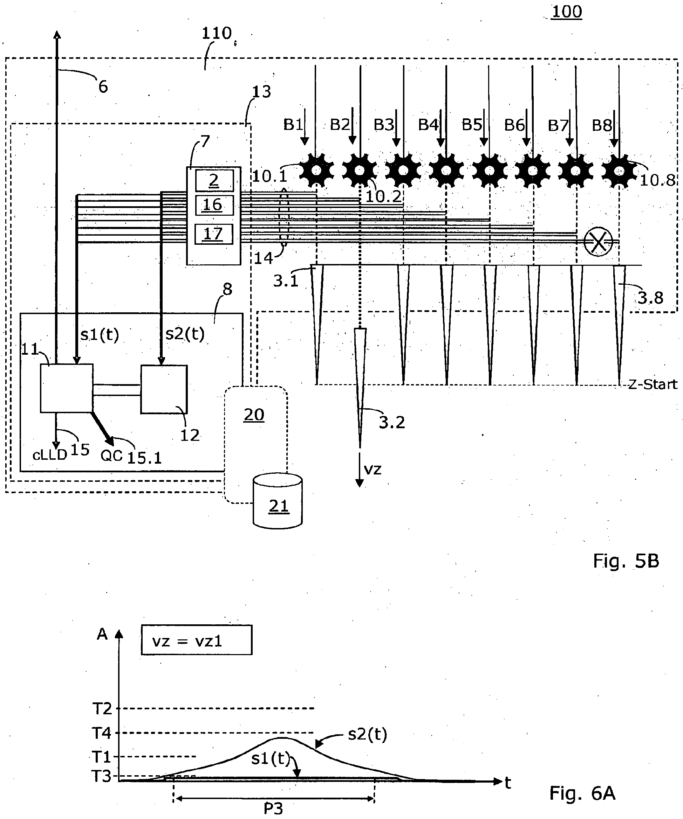

In Fig. 5A ist nun angedeutet, dass das Prüfverfahren der Erfindung im Trockenen ausgeführt wird. D.h. es werden beim Durchführen des Prüfverfahrens keine Fühler oder Spitzen 3.n in irgendwelche Medien 1.n getaucht. Es werden auch keine speziellen Messaufbauten oder andere Vorrichtungen (Labware) eingesetzt. Die Fühler 3.n sind daher in Fig. 5 frei schwebend gezeigt.

Typischerweise beginnt das Prüfverfahren aus einer Position heraus, bei der alle Fühler 3.n sich nebeneinander auf einem Niveau (hier Z-Start genannt) befinden. Zum Prüfen werden nun bei eine mehrkanaligen Anordnung die folgenden Schritte ausgeführt.

Es wird eine Zustellbewegung B2 eines einzelnen Fühlers 3.2 eines einzelnen Kanals K.2 der Messvorrichtung 110 ausgeführt, während sich die anderen Fühler 3.1, 3.3 bis 3.8 der anderen Kanäle der Messvorrichtung 110 nicht bewegen. Die Zustellbewegung B2 des einzelnen Fühlers 3.2 wird durch die Zustellmittel 10.2 bewirkt. Die Zustellbewegung B2 erfolgt mit einer vorgegebenen Geschwindigkeit vz. Während dem Ausführen dieser Zustellbewegung B2 werden das erste Signal s1(t), vorzugsweise ein Signal mit kurzer Pulsweite, und/oder das zweite Signal s2(t), vorzugsweise ein Signal mit grösserer Pulsweite, mindestens eines der Kanäle der Messvorrichtung 110 ausgewertet.

Ziel dieser Auswertung ist das Bereitstellen einer Aussage (z.B. in Form einer Kennung oder einer Speichereintragung) über die elektrische Verbindung des/der einzelnen Fühler 3.n des/der Kanäle K.n der Messvorrichtung 110 mit der Messschaltung 13. Die Aussage über das Vorhandensein und/oder die Qualität einer Verbindung wird hier als Verbindungsaussage bezeichnet.

Vorzugsweise werden entweder nur für den einen Kanal, dessen Fühler 3.2 momentan bewegt wurde (hier als "bewegter" Kanal bezeichnet), oder für alle anderen Kanäle (hier als "nicht-bewegte" Kanäle bezeichnet) eine Kennung (z.B. in Form eines Signals oder Codes) ausgegeben. Diese Kennung kann z.B. über eine Schnittstelle (QC) 15.1 ausgegeben werden. Anhand dieser Kennung kann z.B. das Laborgerät 100 Entscheidungen treffen, Reaktionen auslösen oder dergleichen.

In Fig. 6A ist ein vereinfachter Verlauf der beiden Signale s1(t) und s2(t) gezeigt, der entsteht, wenn in einer Vorrichtung 110, die mit einem Filterverfahren zwei Signale bereit stellt, der Fühler 3.2 langsam mit einer Geschwindigkeit vz1 in z-Richtung zugestellt wird, während die anderen Fühler 3.1, 3.3 - 3.8 nicht bewegt werden. Das schnelle Signal s1(t) verändert sich kaum. Es bleibt in einem Amplitudenbereich unterhalb von T3. T3 wird hier als zweites Signalprüfkriterium betrachtet. Zum Vergleich sind in Fig. 6A auch die Schwellenwerte T1 und T2 nach Fig. 3 gezeigt. Das langsame Signal s2(t) spricht deutlich an, da es bei einer kleineren Frequenz arbeitet und daher die Kapazitätsänderung entsprechend grösser ist. Es bleibt hier aber in einem Amplitudenbereich unterhalb von T4. T4 wird hier als erstes Signalprüfkriterium betrachtet.

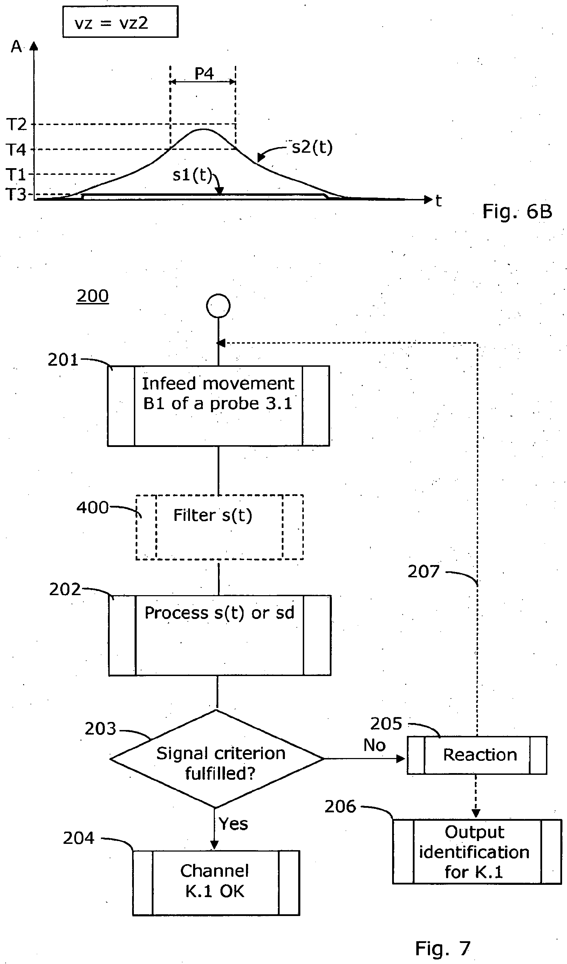

In Fig. 6B ist ein vereinfachter Verlauf der beiden Signale s1(t) und s2(t) gezeigt, der entsteht, wenn der Fühler 3.2 schnell mit einer Geschwindigkeit vz2 (vz2 > vz1) in z-Richtung zugestellt wird, während die anderen Fühler 3.1, 3.3 - 3.8 nicht bewegt werden. Das schnelle Signal s1(t) verändert sich etwas stärker als bei der langsamen Bewegung. Es bleibt jedoch auch hier in einem Amplitudenbereich unterhalb von T3. Zum Vergleich sind in Fig. 6B auch die Schwellenwerte T1 und T2 nach Fig. 3 gezeigt. Das langsame Signal s2(t) spricht noch deutlicher an. Die Amplitude übersteigt den Schwellenwert T4 klar.

Das erste Signalprüfkriterium kann aber auch zum Beispiel die Pulsdauer P4 oder Flankensteigung ST des messbaren Anstiegs des zweiten Signals s2(t) während einer schnellen Bewegung eines Fühlers 3.1 - 3.8 umfassen. Vorzugsweise umfasst das erste Signalprüfkriterium sowohl den Schwellenwert T4 als auch die Pulsdauer P4.

Eine schnelle Bewegung eines einzelnen Fühlers 3.n kann eingesetzt werden, um anhand der Reaktionen der Messschaltung 13 detektieren zu können, ob die elektrische Verbindung (mittels Leitungen 14) zwischen dem Fühler 3.n (mit n=1) oder den einzelnen Fühlern 3.n (mit n>1) und der Messschaltung 13 funktioniert. Wenn die Messschaltung 13 ein langsames Signal s2(t) an dem Kanal K.2 detektiert, dessen Fühler 3.2 schnell bewegt wurde (bewegter Fühler), das ein vorgegebenes erstes Signalprüfkriterium erfüllt, dann ist die elektrische Verbindung 14 zwischen diesem bewegten Fühler 3.2 und der Messschaltung 13 intakt. Zusätzlich kann man bei einem mehrkanaligen Gerät auch die Signale der anderen Fühler 3.1, 3.3 - 3.8 (nicht-bewegte Fühler) auswerten, um zu prüfen, ob sich hier entsprechende Reaktionen der langsamen Signale s2(t) zeigen.

In Fig. 5B ist angedeutet, dass die elektrische Verbindung 14 zwischen dem Fühler 3.8 und der Messschaltung 13 unterbrochen ist. Hier kann zum Beispiel in dem mit einem grossen X gekennzeichneten Bereich ein Kabelbruch vorliegen.

In Fig. 7 ist ein schematisiertes Ablaufdiagramm gezeigt, das die wesentlichen Schritte des (Verbindungs-)Prüfverfahrens 200 einer einkanaligen Messvorrichtung 110 darstellt. Dieses (Verbindungs-)Prüfverfahrens 200 kann auch zum Prüfen eines einzelnen Kanals in einer mehrkanaligen Messvorrichtung 110 angewendet werden. Zum Prüfen der Messvorrichtung 110 werden die folgenden Schritte ausgeführt. Es wird eine Zustellbewegung B1 des Fühlers 3.1 des Kanals K.1 ausgeführt (Fig. 7, Schritt 201). Dieser Fühler 3.1 führt somit eine Relativbewegung in Bezug zu einer sich nicht bewegenden Referenzfläche, einem sich nicht bewegenden Referenzobjekt (z.B. dem Arbeitstisch) oder -körper der Messvorrichtung 110 aus. Die Messschaltung 13 verarbeitet das Ausgangssignal s(t) (Fig. 7, Schritt 202). Optional kann in dem gezeigten Ausführungsbeispiel dieses Signal s(t) gefiltert werden, um z.B. ein geeignetes Frequenzband auswerten zu können (Fig. 7, optionaler Schritt 400). Es wird hier beispielsweise im Rahmen des (Verbindungs-)Prüfverfahrens 200 das Signal s(t), bzw. sd des Kanals K.1 der Messvorrichtung 110 ausgewertet (Fig. 7, Schritt 202), um eine Aussage (z.B. in Form einer Kennung oder einer Speichereintragung) über die elektrische Verbindung 14 zwischen dem Fühler 3.1 und der Messschaltung 13 machen zu können. Beim Verarbeiten des Signals s(t) (Fig. 7, Schritt 202) kann ein Signalprüfkriterium (Fig. 7, Schritt 203) oder eine Kombination von Signalprüfkriterien zur Anwendung kommen. Wenn das oder die Signalprüfkriterien erfüllt sind, dann kann der Kanal K.1.z.B. als OK markiert werden (Fig. 7, Schritt 204). Andernfalls verzweigt das Verfahren 200 in Richtung Schritt 205, um eine Reaktion auszulösen.

Es sind hier und bei den anderen Verfahren eine oder mehrere Reaktionen denkbar. Z.B. kann das Verfahren 200 zurück verzweigen (Pfad 207), um die Prüfung 200 erneut zu durchlaufen. Es ist z.B. auch möglich, als Reaktion einen spezielle Kennung für den entsprechenden Kanal (hier Kanal K.1) auszugeben (Fig. 7, Schritt 206). Es ist z.B. auch möglich, die Prüfung 200 mehrfach (z.B. 3 mal) zu durchlaufen, bevor im Schritt 206 eine spezielle Kennung für den entsprechenden Kanal (hier Kanal K.1) ausgegeben wird.

Als Reaktion können auch zusätzliche Prüfungen vorgenommen werden.

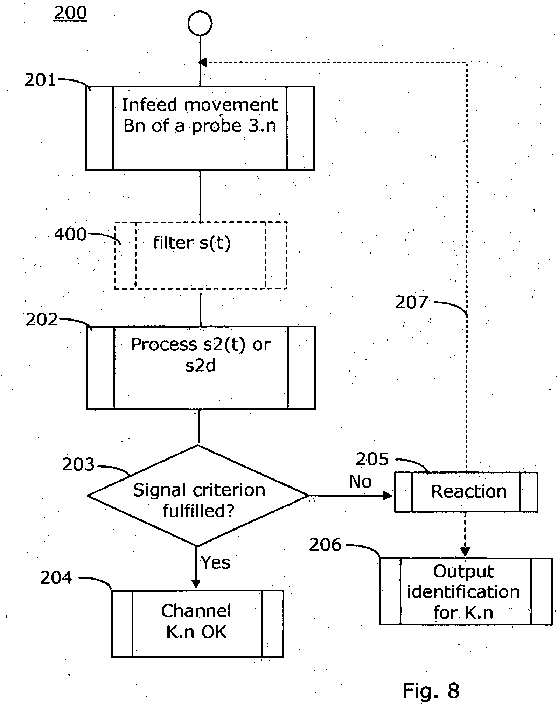

In Fig. 8 ist ein schematisiertes Ablaufdiagramm gezeigt, das die wesentlichen Schritte des (Verbindungs-)Prüfverfahrens 200 einer mehrkanaligen Messvorrichtung 110 darstellt. Zum Prüfen der Messvorrichtung 110 werden die folgenden Schritte ausgeführt. Es wird eine Zustellbewegung Bn eines Fühlers 3.n eines einzelnen Kanals K.n ausgeführt (Fig. 8, Schritt 201), während die anderen Fühler der anderen Kanäle K.n nicht bewegt werden. Die Messschaltung 13 verarbeitet das Ausgangssignal s(t), indem es in dem gezeigten Ausführungsbeispiel dieses Signal s(t) filtert (Fig. 8, Schritt 400). Der optionale Filtervorgang liefert zum Beispiel hier das zweite Signal s2(t), bzw. nach einer Analog-Digital-Umwandlung das Signal s2d. Das Filtern 400 geschieht vorzugsweise bei allen Ausführungsformen, die auf einem Filterverfahren basieren, durch den Einsatz von Hardware- oder Softwarefiltern 16, 17, die z.B. in der Signalverarbeitungsschaltung 7 der Messschaltung 13 sitzen. Es wird hier beispielsweise im Rahmen des (Verbindungs-)Prüfverfahrens 200 das zweite Signal s2(t), bzw. s2d mindestens eines der Kanäle K.n der Messvorrichtung 110 verarbeitet (Fig. 8, Schritt 202), um eine Aussage (z.B. in Form einer Kennung oder einer Speichereintragung) über die elektrische Verbindung 14 zwischen mindestens einem der Fühler 3.n und der Messschaltung 13 machen zu können. Es sind auch hier eine oder mehrere Reaktionen denkbar, wie weiter oben im Zusammenhang mit Fig. 7 beschrieben.

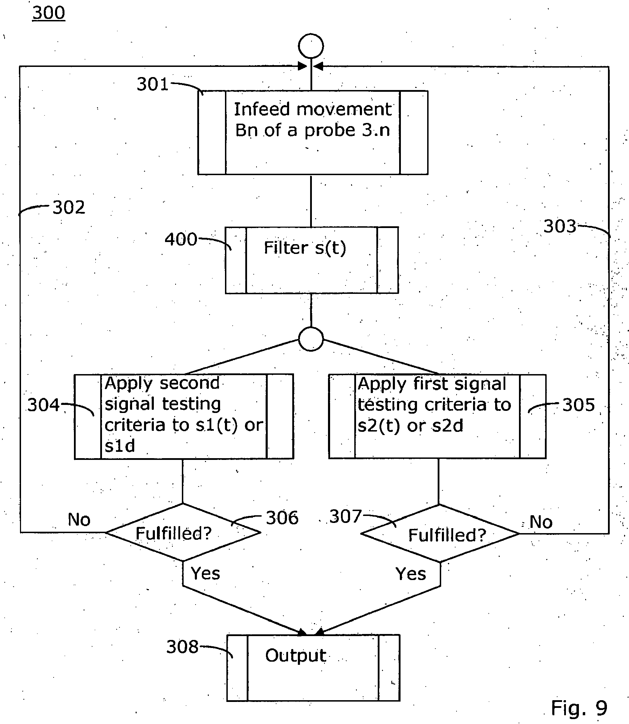

Details eines weiteren Verfahrens 300 zur Verarbeitung des Ausgangssignals s(t) und zur parallelen Auswertung der ersten Signale s1(t), s1d und der zweiten Signal s2(t), s2d sind der Fig. 9 zu entnehmen. Das Verfahren 300 nach Fig. 9 lässt sich auf einkanalige und mehrkanalige Vorrichtungen 100 anwenden. Auch das Verfahren 300 beginnt mit der Zustellbewegung 301 (mindestens) eines Fühlers 3.n. Die Zustellbewegung 301 kann sich, muss sich aber nicht, von der Zustellbewegung 201 unterscheiden. In einem nachgelagerten Schritt 400 wird das analoge Ausgangssignal s(t) unter Anwendung eines Filterverfahrens gefiltert, um die genannten beiden analogen Signale s1(t) und s2(t) zu erhalten. Das Filtern 400 geschieht vorzugsweise bei allen Ausführungsformen durch den Einsatz von Hardware- oder Softwarefiltern 16, 17, die z.B. in der Signalverarbeitungsschaltung 7 der Messschaltung 13 sitzen. Die beiden analogen Signale s1(t) und s2(t) werden dann vorzugsweise durch Analog-Digital-Wandler in die entsprechenden Signale s1d und s2d umgewandelt.

Dann werden, vorzugsweise bei allen Ausführungsformen der Erfindung zeitgleich, die Signalprüfkriterien auf das erste Signal s1(t), bzw. s1d und auf das zweite Signal s2(t), bzw. s2d angewendet, wie durch die Prozesse 304 und 305 angedeutet. Wenn die Signalprüfkriterien erfüllt sind, dann gibt der entsprechende Entscheidungsprozess 306 oder 307 ein entsprechendes (Erfolgs-)Signal (hier die beiden Pfade, die mit einem "ja" gekennzeichnet sind). Falls zum Beispiel alle Signalprüfkriterien erfüllt sind, kann ein Prozess 308 eine Kennung (z.B. ein Signal oder einen Code) ausgeben oder abspeichern. Wenn ein Signalprüfkriterium oder mehrere Signalprüfkriterien nicht erfüllt sind, verzweigt der Prozess beispielsweise zurück zum Anfang, wie durch die beiden Pfade 302, 303 dargestellt (hier die beiden Pfade, die mit einem "nein" gekennzeichnet sind).

Der Durchlauf des Verfahrens 300 kann je nach Ausführungsform mehrfach wiederholt werden, wie im Zusammenhang mit Fig. 7 beschrieben.

Vorzugsweise wird während des Ausführens der Zustellbewegung Bn (Fig. 7 oder Fig. 8, Schritt 201) mindestens ein Fühler 3.n eines Kanals K.n wiederholt elektrisch geladen und entladen und das Ausgangssignal s(t) an diesem Fühler 3.n abgegriffen und verarbeitet (Fig. 7, Schritt 202), oder das Ausgangssignal s(t) wird gefiltert (Fig. 8, Schritt 400) und dann verarbeitet (Fig. 8, Schritt 202).

Vorzugsweise kommt zum Verarbeiten (Fig. 7, Schritt 202) des Ausgangsignals s(t), sd ein entsprechendes Signalprüfkriterium zur Anwendung.

Vorzugsweise kommt zum Verarbeiten (Fig. 8, Schritt 202) des ersten Signals s1(t), s1d ein entsprechendes Signalprüfkriterium (zweites Signalprüfkriterium genannt) zur Anwendung. Zum Verarbeiten (Fig. 8, Schritt 202) des zweiten Signals s2(t), s2d kommt ein entsprechendes anderes Signalprüfkriterium (erstes Signalprüfkriterium genannt) zur Anwendung.

Es wird beim Verarbeiten (Fig. 7, Schritt 202; Fig. 8, Schritt 202; Fig. 9, Schritte 304, 305) abgefragt oder ermittelt, ob die Signale s(t), sd, s1(t), s1d, s2(t), s2d die entsprechenden Signalprüfkriterien erfüllen. Wenn das/die Signalprüfkriterien erfüllt sind, dann wird der entsprechende Kanal K.n als in Ordnung gekennzeichnet (Fig. 7, Schritt 204; Fig. 8, Schritt 204; Fig. 9, Schritt 308). Wenn eines der Signalprüfkriterien oder mehrere der Kriterien nicht erfüllt sind, dann verzweigt das Verfahren nach Fig. 8 und es kommt zu eine Reaktion (Fig. 7, Schritt 205; Fig. 8, Schritt 205; Fig. 9, Pfad 302, 303).

Die Reaktion kann je nach Ausführungsform anders aussehen. So kann z.B. das (Verbindungsprüf-)Verfahren 200 zurück zum Anfang verzweigen (Pfad 207 in Fig. 7 oder Fig. 8), um das Verfahren 200 erneut zu starten, oder das Verfahren 200 kann eine Aussage (z.B. in Form einer Kennung) für den fehlerhaften Kanal K.n ausgeben (z.B. über den QC-Ausgang 15.1) oder z.B. in einem Speichermedium 21 abspeichern (Fig. 7 oder Fig. 8, Schritt 206).

Je nach (Verbindungsprüf-)Verfahren 200 ist ein Kabelbruch bereits dann erkennbar, wenn z.B. der Fühler 3.8 schnell abwärts bewegt wird. Alle Kanäle, ausser dem 8. Kanal, liefern dann mehr oder weniger starke Signale s2(t), welche das erste Signalprüfkriterium erfüllen. Man bekommt also bereits beim schnellen Bewegen eines der anderen Fühler ein erstes Indiz, das etwas mit dem 8. Kanal nicht zu stimmen scheint.

Einen genaueren Aufschluss bekommt man, indem man jeden der Fühler 3.n einer mehrkanaligen Vorrichtung 110 nacheinander schnell bewegt, während die jeweils anderen Fühler nicht bewegt werden. Spätestens wenn man den Fühler 3.8 schnell abwärts bewegt, wird sich zeigen, dass das zweite Signal s2(t) des 8. Kanals nicht das erste Signalprüfkriterium erfüllt. Dadurch ist die fehlerhafte Verbindung des 8. Kanals eindeutig identifiziert.

Zusammenfassend kann festgestellt werden, dass sich durch das Beobachten/Verarbeiten der zweiten Signale s2(t) während dem Ausführen einer schnellen Zustellbewegung mit mindestens einem der Fühler 3.n ermitteln lässt, ob es verbindungstechnisch Probleme bei einem oder mehreren der Kanäle K.n gibt.

Vorzugsweise kann auch das erste schnelle Signal s1(t) zum Prüfen heran gezogen werden. Hier wird vorzugsweise auf ein Beobachten/Auswerten der ersten Signale s1(t) während dem Ausführen einer langsamen Zustellbewegung mindestens einer der Fühler 3.n abgestellt. Wie in Fig. 6A angedeutet, zeigt das erste Signal s1(t) eine kleine Amplitudenänderung. Wenn eine solche kleine Amplitudenänderung während dem langsamen Bewegen detektiert wird, dann ist das Rauschen auf den Kanälen, respektive das Rauschen der gesamten Signalverarbeitungskette inklusive der Messschaltung 13 vernachlässigbar, da es einen ausreichenden Signal-Rauschabstand (signal-to-noise ratio) gibt. Wenn hingegen beim langsamen Bewegen eine Änderung des ersten Signals s1(t) vorliegt, die über einen Schwellenwert T3 hinaus geht, dann liegt störendes Rauschen vor, das beim Durchführen einer Messung Probleme bei der Detektion einer Phasengrenze hervorrufen kann. Offensichtlich ist in diesem Fall das Rauschen so stark, das es das Signal s1(t), das bei einer langsamen Zustellbewegung eines Fühlers 3.n eigentlich relativ klein sein müsste, deutlich überlagert und stört. In diesem Fall ist der Signal-Rauschabstand zu klein.

Beim Beobachten/ Verarbeiten der ersten Signale s1(t) kann ein sogenanntes zweites Signalprüfkriterium zu Anwendung kommen. Bei einer einfachen Ausführungsform der Erfindung handelt es sich bei dem zweiten Signalprüfkriterium um den Schwellenwert T3, der vorgegeben ist. Wenn ein erstes Signal s1(t) den Schwellenwert T3 überschreitet, dann wird das Rauschen als störend oder kritisch angesehen und der entsprechende Kanal K.n als fehlerhaft markiert.

Das zweite Signalprüfkriterium kann aber auch zum Beispiel die Pulsdauer P3 oder Flankensteigung ST des messbaren Anstiegs des ersten Signals s1(t) während einer langsamen Bewegung eines Fühlers 3.n umfassen. Vorzugsweise umfasst das zweite Signalprüfkriterium sowohl den Schwellenwert T3 als auch die Pulsdauer P3.

Vorzugsweise umfasst das Prüfverfahren 200 eine Offset-Kalibrierung für das Signal s(t) oder bei Ausführungsformen mit Filterverfahren sowohl für das schnelle erste Signal s1(t) als auch das langsame zweite Signal s2(t). Falls diese Offset-Kalibrierung keine positiven Resultate liefert, kann dies daran liegen, dass die Vorrichtung 110 zu stark rauscht. In diesem Fall können in einer mehrkantigen Vorrichtung 110 einzelne Fühler 3.n nacheinander langsam bewegt werden, während die jeweils anderen Fühler still stehen. Durch Beobachten/Auswerten der ersten Signale s1(t) während dem Ausführen der langsamen Zustellbewegungen kann ermittelt werden, ob die ersten Signale s1(t) das zweite oder ein spezielles drittes Signalprüfkriterium erfüllen. Falls dies nicht der Fall ist, dann hat sich bestätigt, dass zu starkes Rauschen vorliegt.

Nach dem Ausführen einer Offset-Kalibrierung oder nach dem Ausführen einer Rauscherkennung über die Auswertung des Ausgangssignals s(t) oder der ersten Signale s1(t), wie beschrieben, können die schaltungstechnischen Verbindungen 14 zwischen den Fühlern 3.n und der Messschaltung 13 geprüft werden. Diese Verbindungsprüfung (Prüfverfahren 200) erfolgt, wie beschrieben, durch abwechselndes schnelles Bewegen der Fühler 3.n, während die anderen Fühler 3.n nicht bewegt werden.

Die Reihenfolge dieser Prüfungen kann aber auch so gewählt sein, dass das Ausführen einer Rauscherkennung erst nach der Verbindungsprüfung (Prüfverfahren 200) erfolgt.

Die Rauscherkennung über die Auswertung der ersten Signale s1(t) und das Detektieren schaltungstechnischer Verbindungsprobleme über die Auswertung der zweiten Signale s2(t) können auch getrennt, d.h. unabhängig voneinander ausgeführt werden.

Sowohl die Rauscherkennung über die Auswertung der ersten Signale s1(t) als auch das Detektieren schaltungstechnischer Verbindungsprobleme über die Auswertung der zweiten Signale s2(t) (Verbindungsprüfung 200 genannt) können jeweils so durchgeführt werden, dass nur die Signale s1(t) und s2(t) des bewegten Fühlers (z.B. des Fühlers 3.2) beobachtet und ausgewertet werden. Beide Prüfverfahren können aber auch ausgeführt werden, indem zusätzlich auch die Signale s1(t) und s2(t) anderer Kanäle (nicht-bewegte Kanäle) beobachtet und hinsichtlich der erwähnten Signalprüfkriterien, oder weiterer zusätzlicher Signalprüfkriterien ausgewertet werden.

Vorzugsweise kommt bei allen Ausführungsformen das folgende Prüfverfahren für das Detektieren schaltungstechnischer Verbindungsprobleme, d.h. für die Verbindungsprüfung 200, in einer mehrkanaligen Vorrichtung 110 zum Einsatz:
1. einer der Fühler 3.n wird schnell mit vz2 (z.B. abwärts) bewegt und die Signale s2(t) werden ausgewertet;
   a. Für jeden Kanal K.n mit bewegtem Fühler 3.n (bewegter Kanal):
      i. Falls das langsame Signal s2(t) dieses "bewegten" Kanals K.n das erste Signalprüfkriterium nicht erfüllt (z.B. s2(t) > T4 und/oder s2(t) > P4), dann wird dieser "bewegte" Kanal K.n als nicht verbunden eingestuft (es wird dann z.B. eine entsprechende Kennung über den QC-Ausgang 15.1 ausgegeben oder eine Speichereintragung vorgenommen);
   b. Für jeden "nicht-bewegten" Kanal:
      i. Falls das schnelle Signal s1(t) und/oder das langsame Signal s2(t) eines dieser Kanäle K.n nicht die entsprechenden zweiten Signalprüfkriterien oder die ersten Signalprüfkriterien erfüllt, dann wird dieser "nicht-bewegte" Kanal K.n als "kritisch" eingestuft werden (z.B. weil die Isolation der Koaxialkabel beschädigt ist). Optional kann in einem nachfolgenden Schritt dieses Ergebnis nochmals nachprüfen werden (z.B. indem der Fühler dieses kritischen Kanals K.n bewegt und das langsame Signal s2(t) gemäss a. i. geprüft wird).

Optional kann auch geprüft werden, ob das langsame Signal s2(t) des "bewegten" Kanals K.n ausserhalb eines Messwertfensters oder ausserhalb eines Kriterienbereichs liegt. Falls dies der Fall ist, dann wird dieser "bewegte" Kanal K.n als "kritisch" eingestuft (es wird dann z.B. eine entsprechende Kennung über den QC-Ausgang 15.1 ausgegeben oder eine Speichereintragung vorgenommen).

Optional kann auch geprüft werden, ob das schnelle Signal s1(t) des "bewegten" Kanals K.n nicht die entsprechenden Signalprüfkriterien erfüllt. Falls dies der Fall ist, dann wird dieser "bewegte" Kanal K.n als "kritisch" eingestuft (es wird dann z.B. eine entsprechende Kennung über den QC-Ausgang 15.1 ausgegeben oder eine Speichereintragung vorgenommen).

Je nach Situation können einzelne Kanäle K.n als nicht verbunden eingestuft werden, oder sie können als Kanal K.n eingestuft werden, der einen Test nicht bestanden hat (Einstufung als kritischer Kanal). Im letzteren Fall kann das Verfahren 200 zum Beispiel komplett wiederholt werden (Fig. 7 oder Fig. 8, Pfad 207), es kann eine Prüfung nur des kritischen Kanals vorgenommen werden, oder es können zusätzliche Prüfungen vorgenommen werde.

Zusätzlich zu den oben beschriebenen Prüfverfahren können Störquellen wie folgt getestet werden:
a. Für jeden Kanal K.n mit bewegtem Fühler 3.n:
   i. Langsames Bewegen des Fühlers 3.n mit einer Geschwindigkeit, die vorzugsweise kleiner ist als vz1. Falls das schnelle Signal s1(t) dieses "bewegten" Kanals K.n das zweite oder ein drittes Signalprüfkriterium nicht erfüllt (s1(t) > T3 und/oder s1(t) > P3), dann wird der Test als nicht bestanden eingestuft (es wird dann z:B. eine entsprechende Kennung über den QC-Ausgang 15.1 ausgegeben oder eine Speichereintragung vorgenommen).
   ii. Langsames Bewegen des Fühlers 3.n mit einer Geschwindigkeit, die vorzugsweise kleiner ist als vz1. Falls das schnelle Signal s1(t) dieses "bewegten" Kanals das zweite oder ein drittes Signalprüfkriterium erfüllt (s1(t) < T3 und/oder s1(t) < P3), dann wird der Test als bestanden eingestuft (es wird dann z.B. eine entsprechende Kennung über den QC-Ausgang 15.1 ausgegeben oder eine Speichereintragung vorgenommen).

Je nach Kennung oder Speichereintragung, die nach einer Prüfung vorgenommen wurde, kann über eine Ausgabeeinheit (z.B. einen Bildschirm oder eine Sprachausgabe) der Nutzer der Vorrichtung 110 aufgefordert werden einen Fehler zu beheben oder weitere Schritte auszuführen.

Wenn die Prüfung ergibt, dass die Offset-Kalibrierung und/oder die Ausführung einer Rauscherkennung über die Auswertung des Ausgangssignals s(t) oder der ersten Signale s1(t), wie beschrieben aufgrund von zu grossem Rauschen nicht erfolgt sind/ist, dann können die Erdung des/der Motoren und/oder die Erdung des Laborgeräts 100 geprüft werden. Man kann auch versuchen benachbarte Geräte oder z.B. Lampen oder andere mögliche Störquellen auszuschalten, die elektrisch einstreuen könnten. Danach kann das Prüfverfahren 200 ganz oder teilweise neu durchgeführt werden, um den Erfolg der beschriebenen Massnahmen zu prüfen.

Wenn die Prüfung ergibt, dass die Offset-Kalibrierung und/oder die Ausführung einer Rauscherkennung aufgrund von zu deutlichem Rauschen nicht erfolgt sind/ist, dann kann der Nutzer zum Beispiel aufgefordert werden eventuell fehlende Spitzen oder Fühler 3.n in die Kanäle K.n einzusetzen.

Wenn die Prüfung ergibt, dass die Offset-Kalibrierung und/oder die Ausführung einer Rauscherkennung aufgrund von zu deutlichem Rauschen nicht erfolgt sind/ist, dann kann der Nutzer zum Beispiel aufgefordert werden die Messschaltung 13 zu ersetzen (z.B. durch einen Austausch der Platine, die die Messschaltung 13 umfasst).

Wenn die Verbindungsprüfung 200 ergibt, dass ein bestimmter Kanal K.n nicht oder nicht richtig verbunden ist, dann kann dieser kritische Kanal K.n manuell oder automatisch überprüft werden. Dieses Überprüfen kann Teil der Reaktion 205 sein. Danach kann die Verbindungsprüfung ganz oder teilweise neu durchgeführt werden (Fig. 7 oder Fig. 8, Pfad 207).

Gemäss Erfindung kann das Prüfen schaltungstechnisch unter Einsatz einer Prüfsoftware oder eines oder mehrerer spezieller Module 20 durchgeführt werden. Die Prüfsoftware oder Module 20 können Bestandteil der Vorrichtung 110 oder des Laborgeräts 100 sein. In den Figuren 5A und 5B ist das Prüfverfahren schematisch durch einen Block 20 gekennzeichnet. Vorzugsweise ist der Block 20 in einem Mikroprozessor (z.B. in dem Mikroprozessor 11 und/oder 12) der Messschaltung 13 implementiert.

Der Block 20 ist schaltungstechnisch mit den wichtigsten Komponenten der Vorrichtung 110 oder des Laborgeräts 100 so verbunden, dass er in der Lage ist Prüfabläufe auszulösen, die Signale s1(t), bzw. s1d und s2(t), bzw. s2d zu empfangen, zu verarbeiten und Ergebnisse (z.B. Kennungen) auszugeben oder die erwähnten Speichereintragungen vorzunehmen.

Zu diesem Zweck kann die Vorrichtung 110 oder das Laborgerät 100 ein Speichermedium 21 umfassen. Dieses Speichermedium 21 kann als Eventspeicher ausgelegt sein, in dem die Ergebnisse der Prüfungen gespeichert und für einen späteren Zugriff zugänglich gemacht werden.

Die Vorrichtung 110 oder das Laborgerät 100 umfasst vorzugsweise einen Bus 6, der einen Austausch von Daten ermöglicht. Über diesen Bus 6 kann zum Beispiel das Laborgerät 100 Information aus dem Speichermedium 21 abfragen. Dadurch wird ermöglichet, dass Prozesse, die von dem Laborgerät 100 ausgeführt werden, an die aktuelle Situation angepasst werden können. Dabei kann z.B. ein kritischer Kanal K.n oder ein Fühler 3.n, der als nicht verbunden eingestuft wurde, vom Prozess ausgeschlossen werden, um Fehler zu vermeiden.

Statt der beiden getrennten Mikroprozessoren 11 und 12, kann bei den verschiedenen Ausführungsformen auch ein gemeinsamer, sehr leistungsstarker Prozessor zum Einsatz kommen. Vorzugsweise ist der Block 20 in diesem leistungsstarken Prozessor implementiert.

Vorzugsweise werden bei den verschiedenen Ausführungsformen der Erfindung Entscheidungen durch eine geeignete Software (durch den Block 20 repräsentiert) getroffen und Abläufe von dieser Software (durch den Block 20 repräsentiert) gesteuert/kontrolliert. Zu diesem Zweck übernimmt die Software Informationen und/oder Signal-Werte von dem Controllermodul 8. Anhand von Regeln, die vorgegeben sind, können dann Abläufe gesteuert/kontrolliert, Auswertungen vorgenommen und gegebenenfalls Entscheidungen getroffen werden. So kann die Software z.B. entscheiden, ob ein Fühler 3.n (z.B. in Form einer Nadel oder Pipettenspitze) als kritisch markiert werden soll, z.B. weil er gemäss Erfindung als fehlerhaft erkannt wurde. Die Software kann auch entscheiden, ob ein Kanal K.n komplett abgeschaltet werden soll, oder ob in einem Störfall z.B. Bedienpersonal gerufen werden soll.

**Bezugszeichen:**

| | |
|---|---|
| Flüssigkeit | 1 (allgemein 1.n) |
| Flüssiqkeiten einzelner Kanäle | 1.1 - 1.8 |
| elektronische Lade-/Entlade-Schaltunq | 2 |
| Fühler (z.B. Pipettenspitze) allgemein | 3 (allgemein 3.n) |
| zustellbarer Fühler (z.B. Pipettenspitze) | 3.1 - 3.8 |
| Grundplatte | 4 |
| Flüssigkeitsbehälter allgemein | 5 oder (allgemein 5.n) |
| Flüssigkeitsbehälter einzelner Kanäle | 5.1 - 5.8 |
| Bus | 6 |
| Signalverarbeitungsschaltung | 7 |
| Controllermodul | 8 |
| Zustellmittel (z.B. DC-Motoren) | 10.1 - 10.8 (allgemein 10.n) |
| 1. Mikroprozessor | 11 |
| 2. Mikroprozessor | 12 |
| (Mess-)Schaltung | 13 |
| (Verbindungs-)Leitungen | 14 |
| (cLLD) Schnittstelle | 15 |
| (QC) Schnittstelle | 15.1 |
| Filter | 16 |
| Filter | 17 |
| | |
| Block (Modul/Software) zum Durchführen des Prüfverfahrens | 20 |
| Speichermedium | 21 |
| | |
| Laborgerät | 100 |
| Vorrichtung | 110 |
| | |
| (Verbindungsprüf-)Verfahren | 200 |
| Zustellbewegung | 201 |
| Auswerten | 202 |
| Prüfen, ob Signalprüfkriterium erfüllt ist | 203 |
| Kanal in Ordnunq | 204 |
| Reaktion | 205 |
| Ausgabe/Kennung ausgeben | 206 |
| Pfad | 207 |
| | |
| Weiteres Verfahren | 300 |
| Zustellbewegung | 301 |
| Pfade | 302, 303 |
| zweite Signalprüfkriterien auf s1(t) anwenden | 304 |
| erste Siqnalprüfkriterien auf s2(t) anwenden | 305 |
| erste Signalprüfkriterien erfüllt | 306 |
| zweite Signalprüfkriterien erfüllt | 307 |
| Ausqabe | 308 |
| Ausqanqssiqnal s(t) filtern | 400 |
| | |
| Amplitude | A |
| Zustellbewegung allgemein | B |
| Zustellbewequnq einzelner Kanäle | B1 - B8 (allgemein Bn) |
| Streukapazität | C_{tip/tip} |
| Kopplunqskondensator | C_{coupl} |
| Kapazität zwischen Fühler und Flüssigkeit | C_{tip/lig} |
| Kapazität zwischen dem Fühler und dem Arbeitstisch | C_{tip/worktable} |
| Kanal | K.n, K.m |
| Anzahl/Nummerierunq der Kanäle | n, m |
| Pulsweite / Pulsdauer | P1, P2, P3, P4 |
| Steigung | ST |
| Ausqanqssiqnal | s(t) |
| Ausgangssignal digitalisiert | sd |
| 1. Signal | s1(t) |
| 1. Signal digitalisiert | s1d |
| 2. Signal | s2(t) |
| 2. Signal digitalisiert | s2d |
| Achse | Z |
| Startposition | Z-Start |
| Zeit | t |
| erster Schwellwert | T1 |
| zweiter Schwellwert | T2 |
| weiterer Schwellwert | T3 |
| weiterer Schwellwert | T4 |

## Patentansprüche

1. Prüfverfahren (200; 300) zum berührungslosen Prüfen einer kapazitiv arbeitenden Messvorrichtung (110), wobei die Messvorrichtung (110) eine einkanalige Messvorrichtung (110) ist und umfasst:
- einen einzigen Kanal (K.n) mit einem Fühler (3.n), der in einen Flüssigkeitsbehälter (5.n) des entsprechenden Kanals (K.n) zugestellt werden kann, und
- eine Messschaltung (13),
wobei beim Zustellen des Fühlers (3n) ein Signal (s(t), sd) erzeugt und durch die Messschaltung (13) verarbeitet wird, um eine Phasengrenze zwischen zwei Medien in dem Flüssigkeitsbehälter (5.n) des entsprechenden Kanals (K.n) detektieren zu können,
**dadurch gekennzeichnet, dass** es sich um ein trockenes Prüfverfahren handelt und zum Prüfen in der Messvorrichtung (110) die folgenden Schritte ausgeführt werden:
(a.) Ausführen (201; 301) einer Zustellbewegung (Bn) des Fühlers (3.n) des einen Kanals (K.n) ohne Berühren einer Flüssigkeit, wodurch ein Signal (s(t), sd) an dem Fühler (3.n) erzeugt wird,
(b.) Verarbeiten (202) des Signals (s(t), sd) des Fühlers von diesem einen Kanal (K.n) durch die Messschaltung (13),
(c.) Bereitstellen (206) einer Verbindungsaussage über die elektrische Verbindung (14) zwischen dem bewegten Fühler (3.n) und der Messschaltung (13), basierend auf der Verarbeitung des Signals des Fühlers in Schritt (b.).

2. Prüfverfahren (200; 300) zum berührungslosen Prüfen einer kapazitiv arbeitenden Messvorrichtung (110), wobei die Messvorrichtung (110) eine mehrkanalige Messvorrichtung (110) ist und umfasst:
- mehr als einen Kanal (K.n) mit je einem Fühler (3.n), der in einen Flüssigkeitsbehälter (5.n) des entsprechenden Kanals (K.n) zugestellt werden kann, und
- eine Messschaltung (13),
wobei beim Zustellen eines Fühlers (3n) mindestens ein Signal (s(t), sd; s1(t), sld; s2(t), s2d) erzeugt und durch die Messschaltung (13) verarbeitet wird, um eine Phasengrenze zwischen zwei Medien in dem Flüssigkeitsbehälter (5.n) des entsprechenden Kanals (K.n) detektieren zu können,
**dadurch gekennzeichnet, dass** es sich um ein trockenes Prüfverfahren handelt und zum Prüfen in der Messvorrichtung (110) die folgenden Schritte ausgeführt werden:
(a.) Ausführen (201; 301) einer Zustellbewegung (Bn) eines Fühlers (3.n) eines Kanals (K.n) ohne Berühren einer Flüssigkeit, während die Fühler mindestens eines Teils der anderen Kanäle nicht bewegt werden, wodurch ein Signal (s(t), sd; s1(t), sld; s2(t), s2d) an dem bewegten Fühler (3.n) und an den unbewegten Fühlern der anderen Kanäle (K.n) erzeugt wird,
(b.) Verarbeiten (202) des Signals (s(t), sd; s1(t), sld; s2(t), s2d) mindestens eines Fühlers durch die Messschaltung (13),
(c.) Bereitstellen (206) einer Verbindungsaussage über die elektrische Verbindung (14) zwischen dem mindestens einen Fühler (3.n) und der Messschaltung (13), basierend auf der Verarbeitung des Signals des Fühlers in Schritt (b.).

3. Prüfverfahren (200; 300) nach Anspruch 1, wobei beim Verarbeiten (202) des Signals (s(t), sd) ein entsprechendes Signalprüfkriterium (T3; P3; T4; P4; ST) zur Anwendung kommt.

4. Prüfverfahren (200; 300) nach Anspruch 2, wobei in der Messvorrichtung (110) ein Filterverfahren (400) zur Anwendung gebracht wird, um ein erstes Signal (s1(t), s1d) und ein zweites Signal (s2(t), s2d) aus dem Signal (s(t)) zu gewinnen.

5. Prüfverfahren (300) nach Anspruch 4, wobei beim Verarbeiten (202) des ersten Signals (s1(t), s1d) ein entsprechendes Signalprüfkriterium (T3; P3; ST) zur Anwendung kommt, und wobei zum Auswerten (202) des zweiten Signals (s2(t), s2d) ein entsprechendes anderes Signalprüfkriterium (T4; P4; ST) zur Anwendung kommt.

6. Prüfverfahren (200; 300) nach Anspruch 4, wobei beim Verarbeiten (202) das Signal (s(t), sd; s1(t), sld; s2(t), s2d) desjenigen Kanals (K.n) der Messvorrichtung (110) ausgewertet wird, dessen Fühler (3.n) in Schritt (a.) zugestellt wurde.

7. Prüfverfahren (200; 300) nach Anspruch 4, wobei beim Verarbeiten (202) das erste Signal (s1(t), s1d und/oder das zweite Signal (s2(t), s2d) mindestens eines der nicht bewegten Fühler (3.n) der Messvorrichtung (110) ausgewertet wird.

8. Prüfverfahren (200; 300) nach einem der vorhergehenden Ansprüche, wobei die Verbindungsaussage eine Bewertung zulässt, ob die elektrische Verbindung (14) zwischen dem Fühler (3.n), dessen Signal (s(t), sd; s1(t), sld; s2(t), s2d) ausgewertet wurde, und der Messschaltung (13) vorhanden und/oder qualitativ geeignet ist.

9. Prüfverfahren (200; 300) nach einem der vorhergehenden Ansprüche, wobei während des Ausführens (201) der Zustellbewegung (Bn) mindestens ein Fühler (3.n) eines Kanals (K.n) wiederholt elektrisch geladen und entladen wird.

10. Prüfverfahren (300) nach einem der vorhergehenden Ansprüche, wobei beim Verarbeiten (202) das Signal (s(t), sd; s1(t), sld; s2(t), s2d) unter Anwendung eines Signalprüfkriteriums (T3; P3) ausgewertet wird, um eine Aussage über Rauschen zu treffen.

11. Prüfverfahren (200; 300) nach einem der vorhergehenden Ansprüche, wobei es durchgeführt wird, um
- eine Qualitätsprüfung,
- eine Zwischenprüfung,
- eine Prüfung nach Abschluss eines Fertigungs- oder Montageschritts,
- eine Feldprüfung nach einer Reparatur oder einem Routine-Service zu machen, oder um
- eine Performance Qualification durch zu führen, oder um
- einen "in Process Control" Schritt innerhalb einer Folge von Pipettierschritten durchzuführen.

12. Prüfverfahren (200; 300) nach einem der vorhergehenden Ansprüche, wobei die Zustellbewegung (Bn) zum Ermitteln der Verbindungsaussage schnell vorgenommen wird, wobei die Geschwindigkeit der Zustellbewegung (Bn) vorzugsweise grösser ist als 200 mm/s.

13. Prüfverfahren (200; 300) nach einem der vorhergehenden Ansprüche 1 - 11, wobei die Zustellbewegung (Bn) zum Ermitteln einer Aussage über Rauschen langsam vorgenommen wird, wobei die Geschwindigkeit der Zustellbewegung (Bn) vorzugsweise kleiner ist als 200 mm/s.

14. Vorrichtung (110) mit einem einzigen Kanal (K.n), wobei der Kanal (K.n) zum Detektieren der Phasengrenze zwischen Medien in einem Flüssigkeitsbehälter (5.n) des Kanals (K.n) ausgelegt ist, und der Kanal (K.n) einen Fühler (3.n) umfasst, der in Richtung der Phasengrenze zustellbar ist, und wobei die Vorrichtung (110) eine Schaltung (2, 7, 8) umfasst, die ein Signal (s(t), sd) des Fühlers (3.n) des Kanals (K.n) verarbeitet, um eine Kapazitätsänderung zu detektieren,
wobei die Vorrichtung (110) umfasst:
ein Prüfmodul (20), das in der Lage ist,
o ein trockenes Prüfverfahren gemäss Anspruch 1 durchzuführen.

15. Vorrichtung (110) mit mehreren Kanälen (K.n), wobei jeder Kanal (K.n) zum Detektieren der Phasengrenze zwischen Medien in einem Flüssigkeitsbehälter (5.n) des Kanals (K.n) ausgelegt ist, und jeder Kanal (K.n) einen Fühler (3.n) umfasst, der in Richtung der Phasengrenze zustellbar ist, und wobei die Vorrichtung (110) eine Schaltung (2, 7, 8) umfasst, die ein Signal (s(t), sd; s1(t), sld; s2(t), s2d) des Fühlers (3.n) zumindest eines Kanals (K.n) verarbeitet, um eine Kapazitätsänderung zu detektieren,
wobei die Vorrichtung (110) umfasst:
ein Prüfmodul (20), das in der Lage ist,
o ein trockenes Prüfverfahren gemäss Anspruch 2 durchzuführen.

16. Vorrichtung (110) nach Anspruch 14 oder 15, **dadurch gekennzeichnet, dass** sie mindestens einen Mikroprozessor (11, 12) umfasst, in dem das Prüfmodul (20) implementiert ist.

17. Vorrichtung (110) nach Anspruch 14, 15 oder 16, **dadurch gekennzeichnet, dass** sie ein Speichermedium (21) umfasst, um
- die Verbindungsaussage und/oder
- eine Kennung und/oder
- einen Code
speichern zu können.

18. Vorrichtung (110) nach einem der Ansprüche 14 bis 17, **dadurch gekennzeichnet, dass** sie eine elektronische Lade-/Entlade-Schaltung (2) umfasst, um den Fühler (3.n) mehrfach aufladen und entladen zu können.

19. Vorrichtung (110) nach Anspruch 15, **dadurch gekennzeichnet, dass** sie zur Anwendung eines Filterverfahrens ausgelegt ist, um das Signal (s(t), sd; s1(t), sld; s2(t), s2d) in mindestens ein erstes Signal (s1(t), s1d) und ein zweites Signal (s2(t), s2d) aufzutrennen.

20. Laborgerät (100), das mindestens eine Vorrichtung (110) nach einem der Ansprüche 14 bis 19 umfasst.

## Claims

1. A test method (200; 300) for the contactless testing of a capacitively operating measuring apparatus (110), wherein the measuring apparatus (110) is a single-channel measuring apparatus (110) and comprises:
- a single channel (K.n) having a probe (3.n) which can be fed into a liquid container (5.n) of the respective channel (K.n), and
- a measuring circuit (13), wherein during an infeed movement of the probe (3n) a signal (s(t), sd) is generated and is processed by the measuring circuit (13) in order to enable the detection of a phase boundary between two media in the liquid container (5.n) of the respective channel (K.n),
**characterized in that** it concerns a dry test method and the following steps are carried out for testing in the measuring apparatus (110):
(a.) executing (201; 301) an infeed movement (Bn) of the probe (3.n) of a channel (K.n) without touching a liquid, thereby generating a signal (s(t), sd) on the probe (3.n);
(b.) processing (202) of the signal (s(t), sd) of the probe from this one channel (K.n) by the measuring circuit (13);
(c.) providing (206) a connection statement about the electrical connection (14) between the moved probe (3.n) and the measuring circuit (13), based on the processing of the signal of the probe in step (b.).

2. A test method (200; 300) for the contactless testing of a capacitively operating measuring apparatus (110), wherein the measuring apparatus (110) is a multichannel measuring apparatus (110) and comprises:
- more than one channel (K.n) with one probe (3.n) each, which can be fed into a liquid container (5.n) of the respective channel (K.n), and
- a measuring circuit (13), wherein during an infeed movement of a probe (3n) at least one signal (s(t), sd; s1 (t), s1 d; s2(t), s2d) is generated and is processed by the measuring circuit (13) in order to enable the detection of a phase boundary between two media in the liquid container (5.n) of the respective channel (K.n), **characterized in that** it concerns a dry test method and the following steps are carried out for testing in the measuring apparatus (110):
(a.) executing (201; 301) an infeed movement (Bn) of a probe (3.n) of a channel (K.n) without touching a liquid while the probes of at least a part of the other channels are not moved, thereby generating a signal (s(t), sd; s1(t), s1 d; s2(t), s2d) on the moved probe (3.n) and on the unmoved probes of the other channels (K.n);
(b.) processing (202) of the signal (s(t), sd; s 1 (t), s 1 d; s2(t), s2d) of the at least one probe by the measuring circuit (13);
(c.) providing (206) a connection statement about the electrical connection (14) between the at least one probe (3.n) and the measuring circuit (13), based on the processing of the signal of the probe in step (b.).

3. A test method (200; 300) according to claim 1, wherein a respective signal test criterion (T3; P3; T4; P4; ST) is applied in the processing (202) of the signal (s(t), sd).

4. A test method (200; 300) according to claim 2, wherein a filtering process (400) is applied in the measuring apparatus (110) in order to gain a first signal (s1(t), s1d) and a second signal (s2(t), s2d) from the signal (s(t))).

5. A test method (200; 300) according to claim 4, wherein a respective signal test criterion (T3; P3; T4; P4; ST) is applied in processing (202) of the first signal (s1(t), s1 d), and wherein a respective other signal test criterion (T4; P4; ST) is applied in the evaluation (202) of the second signal (s2(t), s2d).

6. A test method (200; 300) according to claim 4, wherein the signal (s(t), sd; s1(t), s1d; s2(t), s2d) of the channel (K.n) of the measuring apparatus (110) is evaluated in processing (202) whose probe (3.n) was fed in step (a.).

7. A test method (200; 300) according to claim 4, wherein the first signal (s1(t), s1d) and/or the second signal (s2(t), s2d) of at least one unmoved probe (3.n) of the measuring apparatus (110) is evaluated in processing (202).

8. A test method (200; 300) according to one of the preceding claims, wherein the connection statement allows an evaluation whether the electrical connection (14) between the probe (3.n) whose signal (s(t), sd; s1(t), s1d; s2(t), s2d) was evaluated and the measuring circuit (13) is present and/or qualitatively suitable.

9. A test method (200; 300) according to one of the preceding claims, wherein at least one probe (3.n) of a channel (K.n) is repeatedly electrically charged and discharged during the execution (201) of the infeed movement (Bn).

10. A test method (300) according to one of the preceding claims, wherein the signal (s(t), sd; s1(t), s1d; s2(t), s2d) is evaluated in processing (202) by application of a a respective signal test criterion (T3; P3) in order to make a statement on noise.

11. A test method (200; 300) according to one of the preceding claims, wherein it is carried out in order to make
- a quality test,
- an intermediate test,
- a test after completion of a production or mounting step,
- a field test after a repair or a routine service, or in order
- to carry out a performance qualification, or in order
- to carry out an "in process control" step within a sequence of pipetting steps.

12. A test method (200; 300) according to one of the preceding claims, wherein the infeed movement (Bn) for determining the connection statement is carried out rapidly, wherein the velocity of the infeed movement (Bn) is preferably greater than 200 mm/s.

13. A test method (200; 300) according to one of the preceding claims 1 to 11,
wherein the infeed movement (Bn) for determining a statement on noise is carried out slowly, wherein the speed of the infeed movement (Bn) is preferably less than 200 mm/s.

14. An apparatus (110) with a single channel (K.n), wherein the channel (K.n) is configured for detecting the phase boundary between media in a liquid container (5.n) of the channel (K.n), and the channel (K.n) comprises a probe (3.n) which can be fed in the direction of the phase boundary, and wherein the apparatus (110) comprises a circuit (2, 7, 8) which processes a signal (s(t), sd) of the probe (3.n) of the channel (K.n) in order to detect a change in capacitance,
wherein the apparatus (110) comprises:
a test module (20) which is capable
• of carrying out a dry test method according to claim 1.

15. An apparatus (110) with several channels (K.n), wherein each channel (K.n) is configured for detecting the phase boundary between media in a liquid container (5.n) of the channel (K.n), and each channel (K.n) comprises a probe (3.n) which can be fed in the direction of the phase boundary, and wherein the apparatus (110) comprises a circuit (2, 7, 8) which processes a signal (s(t), sd; s1 (t), s1 d; s2(t), s2d) of the probe (3.n) of at least one channel (K.n) in order to detect a change in capacitance,
wherein the apparatus (110) comprises:
a test module (20) which is capable
• of carrying out a dry test method according to claim 2.

16. An apparatus (110) according to claim 14 or 15, **characterized in that** it comprises at least one microprocessor (11, 12) in which the test module (20) is implemented.

17. An apparatus (110) according to claim 14, 15 or 16, **characterized in that** it comprises a storage medium (21) in order to allow the storage of
- the connection statement and/or
- an identifier and/or
- a code.

18. An apparatus (110) according to one of the claims 14 to 17, **characterized in that** it comprises an electronic charging/discharging circuit (2) in order to allow charging and discharging the probe (3.n) multiple times.

19. An apparatus (110) according to claim 15, **characterized in that** it is designed for applying a filtering method in order to split the signal (s(t), sd; s1(t), s1d; s2(t), s2d) into at least one first signal (s1(t), s1d) and one second signal (s2(t), s2d).

20. A laboratory appliance (100) which comprises at least one apparatus (110) according to one of the claims 14 to 19.

## Revendications

1. Méthode d'essai (200 ; 300) pour tester sans contact un dispositif de mesure à fonctionnement capacitif (110), le dispositif de mesure (110) étant un dispositif de mesure à un seul canal (110) et comprenant :
- un canal unique (K.n) avec un capteur (3.n) pouvant être déplacé dans un réservoir à liquides (5.n) du canal correspondant (K.n), et
- un circuit de mesure (13),
dans laquelle, lorsque l'on approche le capteur (3n), il est généré un signal (s(t), sd) qui est traité par le circuit de mesure (13) pour pouvoir détecter une limite de phase entre deux fluides dans le réservoir à liquides (5.n) du canal correspondant (K.n),
**caractérisée en ce qu'**il s'agit d'une méthode d'essai à sec et **en ce que** pour effectuer le test dans le dispositif de mesure (110) on réalise les étapes suivantes:
(a) effectuer (201 ; 301) un mouvement d'approche (Bn) du capteur (3.n) du canal (K.n) sans toucher de liquide, un signal (s(t), sd) étant généré au niveau du capteur (3.n),
(b) traiter (202) le signal (s(t), sd) du capteur de ce canal (K.n) par le circuit de mesure (13),
(c) fournir (206) une indication de liaison sur la liaison électrique (14) entre le capteur déplacé (3.n) et le circuit de mesure (13), sur la base du traitement du signal du capteur de l'étape (b).

2. Méthode d'essai (200 ; 300) pour tester sans contact un dispositif de mesure à fonctionnement capacitif (110), le dispositif de mesure (110) étant un dispositif de mesure à plusieurs canaux (110) et comprenant :
- plusieurs canaux (K.n) avec chacun un capteur (3.n) pouvant être déplacé dans un réservoir à liquides (5.n) du canal correspondant (K.n), et
- un circuit de mesure (13),
dans laquelle, lorsque l'on approche un capteur (3n), il est généré au moins un signal (s(t), sd ; s1(t), s1d ; s2(t), s2d) qui est traité par le circuit de mesure (13) pour pouvoir détecter une limite de phase entre deux fluides dans le réservoir à liquides (5.n) du canal correspondant (K.n), **caractérisée en ce qu'**il s'agit d'une méthode d'essai à sec et **en ce que** pour effectuer le test dans le dispositif de mesure (110) on réalise les étapes suivantes:
(a) effectuer (201 ; 301) un mouvement d'approche (Bn) d'un capteur (3.n) d'un canal (K.n) sans toucher de liquide, pendant que les capteurs d'au moins une partie des autres canaux ne sont pas déplacés, un signal (s(t), sd ; s1 (t), s1 d ; s2(t), s2d) étant généré au niveau du capteur déplacé (3.n) et au niveau des capteurs non déplacés des autres canaux (K.n),
(b) traiter (202) le signal (s(t), sd ; s1(t), s1d ; s2(t), s2d) d'au moins un capteur par le circuit de mesure (13),
(c) fournir (206) une indication de liaison sur la liaison électrique (14) entre le au moins un capteur (3.n) et le circuit de mesure (13), sur la base du traitement du signal du capteur de l'étape (b).

3. Méthode d'essai (200 ; 300) selon la revendication 1, dans laquelle, lors du traitement (202) du signal (s(t), sd), on utilise un critère de test de signal correspondant (T3 ; P3 ; T4 ; P4 ; ST).

4. Méthode d'essai (200 ; 300) selon la revendication 2, dans laquelle il est utilisé dans le dispositif de mesure (110) un procédé de filtrage (400) pour obtenir à partir du signal (s(t)) un premier signal (s1(t), s1d) et un deuxième signal (s2(t), s2d).

5. Méthode d'essai (300) selon la revendication 4, dans laquelle on utilise lors du traitement (202) du premier signal (s1(t), s1d) un critère de test de signal correspondant (T3 ; P3 ; ST) et dans laquelle on utilise pour l'analyse (202) du deuxième signal (s2(t), s2d) un autre critère de test de signal correspondant (T4 ; P4 ; ST).

6. Méthode d'essai (200 ; 300) selon la revendication 4, dans laquelle lors du traitement (202), on analyse le signal (s(t), sd ; s1(t), s1d ; s2(t), s2d) du canal (K.n) dont le capteur (3.n) a été déplacé lors de l'étape (a).

7. Méthode d'essai (200 ; 300) selon la revendication 4, dans laquelle lors du traitement (202), on analyse le premier signal (s1(t), s1d) et/ou le deuxième signal (s2(t), s2d) d'au moins un des capteurs non déplacés (3.n) du dispositif de mesure (110).

8. Méthode d'essai (200 ; 300) selon l'une des revendications précédentes, dans laquelle l'indication de liaison permet une évaluation permettant de déterminer s'il y a liaison électrique (14) entre le capteur (3.n), dont le signal (s(t), sd ; s1(t), s1d ; s2(t), s2d) a été analysé, et le circuit de mesure (13) et si cette dernière est correcte sur le plan qualitatif.

9. Méthode d'essai (200 ; 300) selon l'une des revendications précédentes, dans laquelle pendant l'exécution (201) du mouvement d'approche (Bn), au moins un capteur (3.n) d'un canal (K.n) est chargé et déchargé électriquement de façon répétée.

10. Méthode d'essai (300) selon l'une des revendications précédentes, dans laquelle, lors du traitement (202), on analyse le signal (s(t), sd ; s1 (t), s1d ; s2(t), s2d) à l'aide d'un critère de test de signal (T3, P3) pour obtenir une indication sur le bruit.

11. Méthode d'essai (200; 300) selon l'une des revendications précédentes, dans laquelle on réalise cette méthode d'essai pour
- un contrôle qualité,
- un contrôle intermédiaire,
- un contrôle à la suite d'une étape de fabrication ou de montage,
- effectuer un essai sur le terrain après une réparation ou un entretien de routine, ou pour
- réaliser une qualification des performances, ou bien pour
- effectuer une étape « in process control » dans une suite d'étapes de pipetage.

12. Méthode d'essai (200 ; 300) selon l'une des revendications précédentes, dans laquelle le mouvement d'approche (Bn) pour déterminer l'indication de liaison est effectué rapidement, la vitesse du mouvement d'approche (Bn) étant de préférence supérieure à 200 mm/s.

13. Méthode d'essai (200 ; 300) selon l'une des revendications 1 à 11, dans laquelle le mouvement d'approche (Bn) pour déterminer une indication sur le bruit est effectué lentement, la vitesse du mouvement d'approche (Bn) étant de préférence inférieure à 200 mm/s.

14. Dispositif (110) comprenant un seul canal (K.n), le canal (K.n) étant conçu pour détecter la limite de phase entre des fluides dans un réservoir à liquides (5.n) du canal (K.n), et le canal (K.n) comprenant un capteur (3.n) pouvant être déplacé en direction de la limite de phase, le dispositif (110) comprenant un circuit (2, 7, 8) qui traite un signal (s(t), sd) du capteur (3.n) du canal (K.n) pour détecter une modification de capacité,
le dispositif (110) comprenant un module d'essai (20) capable de réaliser une méthode d'essai à sec selon la revendication 1.

15. Dispositif (110) comprenant plusieurs canaux (K.n), dans lequel chaque canal (K.n) est conçu pour détecter la limite de phase entre des fluides dans un réservoir à fluides (5.n) du canal (K.n), chaque canal (K.n) comprenant un capteur (3.n) pouvant être déplacé en direction de la limite de phase, le dispositif (110) comprenant un circuit (2, 7, 8) qui traite un signal (s(t), sd ; s1(t), s1d ; s2(t), s2d) du capteur (3.n) d'au moins un canal (K.n) pour détecter une modification de capacité,
le dispositif (110) comprenant un module d'essai (20) capable de réaliser une méthode d'essai à sec selon la revendication 2.

16. Dispositif (110) selon la revendication 14 ou 15, **caractérisé en ce qu'**il comprend au moins un microprocesseur (11, 12) dans lequel est mis en place le module d'essai (20).

17. Dispositif (110) selon la revendication 14, 15 ou 16, **caractérisé en ce qu'**il comprend un moyen de stockage (21) pour pouvoir stocker
- l'indication de liaison et/ou
- un identifiant et/ou
- un code.

18. Dispositif (110) selon l'une des revendications 14 à 17, **caractérisé en ce qu'**il comprend un circuit électronique de charge/décharge (2) pour pouvoir charger et décharger le capteur (3.n) à plusieurs reprises.

19. Dispositif (110) selon la revendication 15, **caractérisé en ce qu'**il est conçu pour utiliser un procédé de filtrage pour séparer le signal (s(t), sd ; s1 (t), s1 d ; s2(t), s2d) en au moins un premier signal (s1 (t), s1d) et un deuxième signal (s2(t), s2d).

20. Appareil de laboratoire (100) comprenant au moins un dispositif (100) selon l'une des revendications 14 à 19.
